(19) Europäisches Patentamt
European Patent Office
Office européen des brevets

(11) EP 3 641 217 A2

(12) # EUROPEAN PATENT APPLICATION
published in accordance with Art. 153(4) EPC

(43) Date of publication:
**22.04.2020 Bulletin 2020/17**

(21) Application number: **18818241.4**

(22) Date of filing: **18.06.2018**

(51) Int Cl.:
***H04L 9/32*** *(2006.01)* ***G06Q 20/40*** *(2012.01)*
***H04L 9/16*** *(2006.01)*

(86) International application number:
**PCT/JP2018/023123**

(87) International publication number:
**WO 2018/230742 (20.12.2018 Gazette 2018/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2017 JP 2017118373**

(71) Applicant: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(54) **EXECUTION DEVICE, COMMAND DEVICE, METHODS EXECUTED BY SAME, AND COMPUTER PROGRAM**

(57) A technique of preventing a man-in-the-middle attack is proposed. An internet banking system includes a user terminal and a settlement device that can communicate with each other via a network. The user terminal generates original data containing instruction data related to an instruction to be executed by the settlement device (S802), encrypts the original data into encrypted instruction data (S803), and transmits the encrypted instruction data to the settlement device (S805, 901). The settlement device decrypts the encrypted instruction data to returns the encrypted instruction data to the original data (S902), and executes an operation specified by the instruction data contained in the original data (S904).

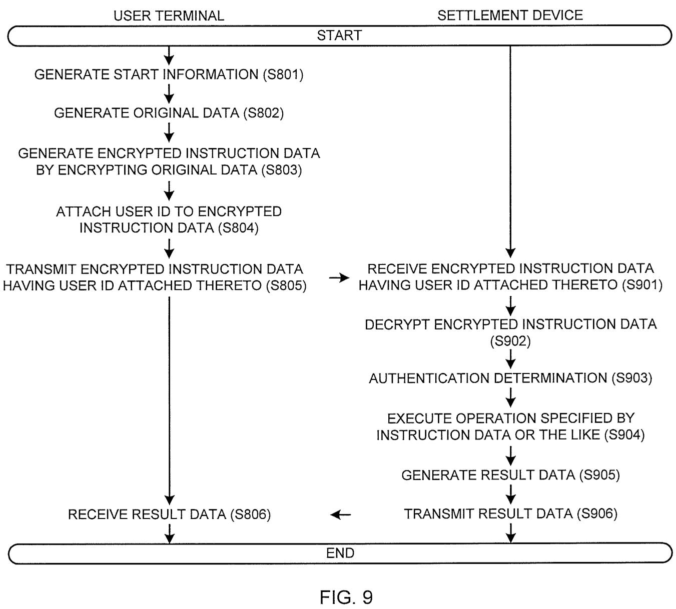


FIG. 9



Printed by Jouve, 75001 PARIS (FR)

## Description

### Technical Field

The present invention relates to an authentication technique that can be applied to, for example, Internet banking.

### Background Art

The authentication technique is applied to, for example, electronic locks, and the electronic locks are applied to various objects, for example, keys for automobiles.

The electronic locks used for automobiles are as follows.

An electronic lock for an automobile includes a locking device provided on an automobile side, and a key device held by a user. The key device is configured to be capable of generating key data corresponding to a key in a general lock. Furthermore, the key device is configured to be capable of transmitting the key data to the locking device, for example, wirelessly. The locking device receives the key data from the key device, and determines whether the key data is authentic. This determination may be grasped as "authentication" processing. However, when the key data is determined to be authentic in any case, the locking device unlocks the door of an automobile.

When electronic locks began to appear, only one type of key data was generated by a key device (or stored in the key device). Therefore, in the case of such an electronic lock, the same key data was always transferred from a key device to a locking device, and the door of an automobile were unlocked based on the determination as to authenticity of the key data (for example, when the key data provided from the key device to the locking device was coincident with key data held from the beginning in the locking device, it was determined that the key data provided from the key device to the locking device was authentic). Of course, if the key data is always the same, it is easy for a malicious third party to know the key data and also duplicate the key device capable of transmitting the key data. Therefore, there has been a problem of theft of automobiles caused by unauthorized unlocking of the doors of the automobiles using duplicated key devices.

In order to prevent such a problem, there was thereafter developed a technique in which a large number of key data were stored in advance in the key device, and one of the large number of key data was transmitted from the key device to the locking device every time it was necessary to unlock the door of the automobile. However, the number of key data to be recorded in advance in the key device was limited although there were a large number of key data. Therefore, if all of the key data recorded in the key device were stolen by a malicious third party, the problem of theft of automobiles still occurred.

Furthermore, there has already been practically used a technique in which a key data generating device for generating different key data one after another is incorporated in the key device without having stored key data in the key device, and key data generated newly in the key data generating device is transmitted from the key device to the locking device every time it is required to unlock the door of an automobile.

The key data in this case is something like a one-time password that can be used only for some time after it is generated in the key device. In the case of use of such key data, even if the key data is stolen by a malicious third party, the key data is immediately invalidated, so that there is little possibility that the malicious third party can steal an automobile by using the stolen key data, which has been believed at least so far. In particular, in the case of use of such key data, the key data generating device as described above is incorporated in the key device, and also a key data generating device which is different from the foregoing key data generating device and can generate, one after another, the same key data as generated in the key data generating device incorporated in the key device is required to be provided on the locking device side. However, it has been believed that by complicating a method used to generate the key data with the key data generating devices incorporated in the key device and locking device respectively, a malicious third party would be virtually incapable of acquiring the next key data to be used, so that theft of an automobile caused by unlocking of the door of the automobile with an unauthorized key data should not occur in theory.

### Summary of Invention

### Technical Problem

However, even when key data such as the one-time password described above is used, there has occurred a situation in which the door of an automobile is illegally unlocked and the automobile is stolen. This has been done by a very simple method described below.

For example, it is assumed that a key device is present at a place away from an automobile. For example, a malicious third party operates the key device or the like to cause a key data generating device incorporated in the key device to generate key data, and directly obtains the key data transmitted from the key device on radio waves, for example.

Then, the radio wave carrying the key data is transmitted near the target automobile by using an appropriate device. In this case, a locking device mounted on the automobile that has received the key data by receiving the radio wave determines that the key data is authentic, and unlocks the lock provided on the door of the automobile. As a result, the automobile has been stolen.

The characteristic of this automobile theft method is in that a malicious third party entirely steals key data that was legitimately created with a legitimate key device, whereby the malicious third part can steal an automobile without knowing the content of the key data at all. In other words, the malicious third party executing this theft method neither needs to know the content of the key data nor needs to know how the key data is generated. In addition, even if the key data transferred from the key device to the locking device is encrypted, and further even if processing used for the encryption of the key data is so advanced that the malicious third party cannot decrypt it, they does not affect the conclusion that malicious third party can steal the automobile.

A method of committing a crime by entirely stealing legitimate authentication data created legitimately by a legitimate device as described above is generally called a man in the middle attack (MITM).

The man in the middle attack is a technique for enabling impersonation in authentication. In general, this technique has a very troublesome property that it cannot be prevented even by enhancing the complexity of processing to be executed on an authenticating side and an authenticated side, for example, the foregoing processing for generation of the key data as much as possible, and also even by enhancing the level of encryption of data to be transferred for authentication from the authenticated side to the authenticating side as much as possible.

Of course, the man in the middle attacks is not a problem inherent in electronic locks for automobiles. For example, it is general in recent buildings that a security check using an admission card having an IC chip embedded therein is performed at entrances to the buildings. In a typical example, a security gate system used for such an application includes admission cards each of which has an IC chip incorporated therein and possessed by each user, an authentication device which is usually arranged at the entrance of a building and has a card reader for reading the IC chip of the admission card, and a gate which is opened by the authentication device when data read out by the card reader is authentic. In such a security check mechanism, when an authentic admission card is put on the card reader and the authentication device determines that authentication data passed from the IC chip of the admission card to the card reader is authentic, the gate is opened, and an owner of the admission card is allowed to pass through the gate. However, in the case where the admission card is in the hands of a malicious third party, for example, due to theft, the malicious third party could pass through the gate even if authentication data recorded in an IC chip or generated in the IC chip is elaborated as much as possible, or even if an authentication device including a card reader is elaborated as much as possible, or even if an encryption technique whose level is as high as possible is used when authentication data is transmitted from the IC chip of the admission card to the card reader of the authentication device.

Furthermore, a similar problem has arisen in Internet banking. An Internet banking system includes user devices that are used by a large number of users, and a server device that is managed by a bank or the like and can communicate with the user devices via a network such as the Internet.

In the case of the Internet banking, a man in the middle invades between a user device and the server device. In this case, the man in the middle acts as a server device for the user device, and also serves as a user device for the server device. In a typical example, the man in the middle commits a crime as follows.

For example, it is assumed that the user device and the server device are attempting to perform encrypted communication based on a common key method. By means of the encrypted communication based on the common key method, the user device encrypts, for example, instruction data for promoting the server device to perform payment from an account of a user possessing the user device, the account being managed by the server device, to a third party specified by the user, and transmits the encrypted instruction data to the server device. The server device receives the encrypted instruction data, decrypts the encrypted instruction data, grasps the content of the instruction data returned to a plain text, and executes processing instructed by the instruction data. In this case, the user device and the server device cannot perform the communication using the common key method with each other unless they are set to have the same common key before the user device instructs the server device. Therefore, prior to the encrypted communication using the common key method, encrypted communication based on a public key method is executed between the user device and the server device.

When the foregoing processing is normally performed, the user device first transmits authentication information and a public key possessed by the user device itself to the server device. The server device receives the authentication information and the public key, authenticates the user with the authentication information, encrypts a common key to be used later with the user device by the public key received from the user, and returns the encrypted common key to the user device. The user device decrypts the common key received from the server device by using a private key which is possessed by the user device and paired with the public key of the user device. As a result, the user device and the server device are set to have the same common key.

The man in the middle impersonates the server device to receive the authentication information and the public key of the user device transmitted to the server device by the user device in the above-described case. Then, the man in the middle impersonates the user device to transmit, to the server device, the authentication information stolen from the user and its own public key instead of the public key transmitted from the user device. The server device receives the authentication information and the public key transmitted from the man in the middle. Then, the server device performs authentication processing by using the authentication information. Since the authentication information is legitimate one which has been originally transmitted from the user device, the authentication using the authentication information does not enable the server device to perceive that the man in the middle is impersonating the user device. The server device encrypts the common key possessed by itself with, not the public key of the user device, but the public key of the man in the middle received from the man in the middle, and then transmits the encrypted key to the man in the middle. The man in the middle decrypts the common key received from the server device by using the private key which is possessed by the man in the middle and paired with the public key of the man in the middle. As a result, the man in the middle and the server device are set to have the same common key. Even in this state, the server device misidentifies the man in the middle as the user device.

Furthermore, the man in the middle encrypts an appropriate common key possessed by himself/herself with the public key of the user device received from the user device, and transmits the encrypted common key to the user device. The user device that has received the encrypted common key decrypts the common key received from the man in the middle with the private key possessed by the user device. As a result, the man in the middle and the user device are set to have the same common key. In this state, the user device misidentifies the man in the middle as the server device.

Thereafter, the man in the middle can perform encrypted communication with the server device by using the common key shared with the server device, and can also perform encrypted communication with the user device by using the common key shared with the user device. The man in the middle can transmit the above-described instruction data to the server device while impersonating the user device. In this case, the man in the middle may receive some instruction data from the user device by requesting the man in the middle to transmit instruction data or the like. When the man in the middle receives instruction data related to remittance to a third party as described above from the user device, the man in the middle rewrites data of a remittance destination. When the man in the middle has rewritten the remittance destination, the man in the middle transmits the instruction data to the server device. The server device remits money from the user's account to a third party unintended by the user possessing the user device in accordance with an instruction based on the falsified instruction data transmitted by the man in the middle. In this case, both the communication between the user device and the man in the middle and the communication between the man in the middle and the server device are encrypted with the common keys. However, for the man in the middle who has the same common key with the user device and also has the same common key with the server device, both the communications are equivalent to unencrypted communication.

In this way, the man in the middle has wangled money while being perceived by neither a user who is an owner of the user device nor a manager or the like of the server device. It is said that the amount of money stolen in this way is equal to several billions of yen per year in Japan alone, but the published amount of money is also said to be the tip of the iceberg.

In fact, there is no way to deal with man in the middle attack. Even among security experts, it is an implicit understanding that the man in the middle attack is an attack that cannot be prevented, and thus should be ignored or refused to talk about its possibility.

The invention has an object to provide a technique that can defend a man in the middle attack in a specific case.

**Solution to Problem**

Prior to describing an invention that solves this problem, considerations made by the inventor of the present application will be described.

Note that in the following description, a device for transferring data to request execution of some processing is referred to as an instruction device, and a device for receiving data to execute some processing upon reception of the data as a trigger is referred to as an execution device. In the examples described in Background Art or the like, in the case of the electronic lock, the key device corresponds to the instruction device, and the lock device corresponds to the execution device, in the case of the security gate system, the admission card corresponds to the instruction device, and the authentication device corresponds to the execution device, and in the case of the Internet banking system, the user device corresponds to the instruction device and the server device corresponds to the execution device.

According to the consideration of the inventor of the present application, the execution device should be considered separately in a case where it performs only one type of operation and in a case where it performs a plurality of types of operations. Particularly when the execution device performs only one type of operation, it is almost impossible to prevent a man in the middle attack.

The one type of operation means, for example, that an operation to be executed based on an instruction from the instruction device by the execution device is to "recognize it as being authentic by authentication", "unlock the lock" or the like, and it is not an operation of selecting one type of operation from a plurality of types.

For example, a case where a user pays from his/her bank account to another person's bank account in the Internet banking is considered. In this case, the user instructs an instruction to a bank server for settling an account (which corresponds to the execution device referred to in the invention of the present application) by means of a user's own terminal (for example, a smartphone, which corresponds to the instruction device referred to in the invention of the present application). In this case, it is needless to say that the processing to be performed by the bank server is not limited to one type. More specifically, the processing to be performed by the bank server in response to an instruction from the user terminal is not limited to the payment as described above, but includes balance inquiry, detailed history inquiry, and the like, so that the processing to be performed by the bank server is more diverse. Description is returned to the story. The processing to be performed by the bank server for payment has various variations at least with respect to a payment source, a payee, and a payment amount. In other words, in this case, even if it is assumed that a user who requests payment or a bank account of a user who is a payment source has already been specified, an instruction transmitted from the user terminal to the bank includes at least information for specifying a payee, and information for specifying a payment amount. Since the processing to be performed by the bank server changes according to these two pieces of information, in this example, the operation to be executed by the bank server as an example of the execution device is not limited to one type.

By the way, according to the idea of the inventor of the present application, in such processing, it is possible in some cases to prevent a man-in-the-middle attack. That is a case where the instruction data for the above instruction has been completely (unbreakable) encrypted. When a malicious third party attempts to steal and misuse the data of the above instruction transmitted over the Internet, it is necessary at least to rewrite the information for specifying the payee included in the above instruction to a payee that is convenient for the malicious third party, and it is more preferable that the payment amount included in the above instruction is also rewritten to a payment amount convenient for the malicious third party. In the example of the Internet banking system described in the problem to be solved by the invention, it is possible for the man in the middle to perform such data rewriting because the man in the middle first has succeeded in having the same common key with each of both the user device and the server device.

However, in the case where a malicious third party rewrites the information for specifying the payee included in the above instruction to a payee convenient for the malicious third party and then encrypts the information according to an encryption method used between the user terminal and the bank server, this is impossible if the encryption is perfect. As described above, when there are variations in the operation to be executed by the execution device, there is a possibility that the man in the middle attack can be eliminated. In other words, in the case where there are variations in operation to be executed by the execution device, and an instruction with which the instruction device causes the execution device to execute an operation includes information for specifying an operation to be executed by the execution device from variations in operation, even when the malicious third party steals data relating to the instruction and merely transfers the data to the execution device with no modification, it may be impossible to cause the execution device to execute an operation desired by the malicious third party. As described above, it is difficult to prevent the man in the middle attack because it uses the stolen information as it is, and thus it may be possible to prevent the man in the middle attack in such a case that stolen information cannot be used as it is or there are variations in operation to be executed by the execution device.

On the other hand, in the case where the operation to be executed by the execution device in response to an instruction from the instruction device is only one type of operation, even when data to be transferred from the instruction device to the execution device contains something, an operation to be executed by the execution device when a malicious third party has stolen the data and transfers the data to the execution device is always one type of operation that has been intended. In such a case that rewriting of data is not necessary, there is generally no way to prevent the man in the middle attack.

The present invention is based on the foregoing considerations, and in particular, prevents a man-in-the-middle attack in such a case that there are variations in processing to be executed in the execution device. For convenience of explanation, the invention of the present application is divided into a first invention and a second invention.

The invention of the present application according to a first invention is an execution device that is used in combination with an instruction device which is a device capable of transmitting an instruction serving as a trigger for performing an operation, and performs an operation when receiving an instruction from the instruction device.

The instruction device used in combination with the execution device includes instruction device encryption means for generating encrypted instruction data by encrypting original data containing instruction data related to an instruction for specifying one operation from among operations that can be performed by the execution device, is configured to transfer the encrypted instruction data encrypted by the instruction device encryption means to the execution device, thereby performing the instruction.

Furthermore, the execution device includes reception means for receiving the encrypted instruction data, execution device decryption means for decrypting the encrypted instruction data to return the encrypted instruction data to the original data, and execution means for executing, as the operation, an operation specified by the instruction data contained in the original data decrypted by the execution device decryption means when the encrypted instruction data has been returned to the original data by the execution device decryption means.

The execution device according to the first invention receives instruction data and executes an instruction conforming to the instruction data. There are a plurality of types of operations to be executed based on the instruction data, and variations exist. The instruction data transferred to the execution device, more accurately, original data containing at least the instruction data are transferred to the execution device in a state where the original data is encrypted into encrypted instruction data. The execution device decrypts the encrypted instruction data. In the execution device of the invention of the present application, effective authentication is performed depending on whether such decryption has been performed. In other words, the execution device decryption means of the execution device shall not be able to decrypt encrypted instruction data unless the encrypted instruction data is authentic encrypted instruction data transferred by an authentic instruction device. In other words, when the execution device decryption means can decrypt encrypted instruction data, an instruction device that has transferred the encrypted instruction data is authenticated to be authentic, and when the execution device decryption means cannot decrypt encrypted instruction data, an instruction device that has transferred the encrypted instruction data is authenticated not to be authentic. When the execution device authenticates that the instruction device that has passed the encrypted instruction data is authentic because the encrypted instruction data has been encrypted, the execution device executes an operation specified by instruction data contained in the decrypted original data.

As described above, when the encrypted instruction data is completely encrypted, the operation which is to be executed by the execution device and is specified by the instruction data (encrypted instruction data) cannot be rewritten by a man in the middle. Even when a man in the middle steals encrypted instruction data which the instruction device is attempting to transfer to the execution device, and impersonates the instruction device to transfer the encrypted instruction data to the execution device, an operation to be performed by the execution device is still left as an operation that the instruction device intends to cause the execution device to perform if the encrypted instruction data has not been rewritten. Therefore, according to the execution device of the invention of the present application, it is possible to prevent a man-in-the-middle attack or make a man-in-the-middle-attack harmless even when the man-in-the-middle attack has been made.

In the first invention of the present application, there is another reason why the man-in-the-middle attack can be at least disempowered. For example, as in the case of the Internet banking system exemplified in Technical Problem, there has been conventionally performed two-stage processing in which the execution device first authenticates an instruction device, and after performing such authentication, the execution device executes an operation based on instruction data received from the instruction device. In this case, a man in the middle who has been able to deceive the execution device in the authentication processing can transfer instruction data convenient for the man in the middle to the execution device. On the other hand, authentication is also performed by using data obtained by encrypting the instruction data, that is, the foregoing two-stage processing of the authentication by the transfer of the authentication data and the instruction by the transfer of the instruction data is made into one-stage processing, whereby it is possible to effectively eliminate an opportunity for performing a man-in-the-middle attack. As a result, according to the present invention, the man-in-the-middle attack can be at least made harmless.

Note that in order to avoid a man-in-the-middle attack, it is preferable to use a common key encryption method using a common key for the encryption and decryption methods used in the instruction device encryption means of the instruction device and the execution device decryption means of the execution device.

As described above, in the execution device according to the first invention of the present application, the fact that encrypted instruction data has been decrypted authenticates that an instruction device transferring the encrypted instruction data is actually authentic. However, it is also possible to perform other authentication in the execution device. In that case, for example, the instruction device may contain appropriate authentication data in original data that is a source of encrypted instruction data, encrypts the original data containing the instruction data and the authentication data by the instruction device encryption means to obtain the encrypted instruction data, and transfer the encrypted instruction data to the execution device. In this case, the execution device receives the encrypted instruction data by the reception means, decrypts the encrypted instruction data by the execution device decryption means, and performs actual authentication by the fact that the encrypted instruction data has been decrypted. Additionally, authentication is also performed by authentication means serving as means for performing authentication based on the authentication data contained in the original data (for example, authentication is performed by checking coincidence with authentication data which has been held by the execution device). When both of two conditions in which the decryption has been performed by the execution device decryption means and also authentication based on the authentication data has been performed are satisfied, the execution means may perform an operation specified by the instruction data.

The execution device in the first invention may be configured as follows.

The instruction device in this case comprises: instruction device solution generation means capable of sequentially generating, based on an initial solution, a solution that is an enumeration of a predetermined number of pieces of at least one type of letters, numerals and symbols and is always generated as an identical one under a same condition; and instruction device key generation means for generating a key based on the solution generated by the instruction device solution generation means every time the encrypted instruction data is transferred to the execution device, and the instruction device encryption means is adapted to perform encryption with a different key every time the instruction device encryption means encrypts the original data by using a key generated by the instruction device key generation means.

The execution device which is used in combination with the above instruction device comprises execution device solution generation means capable of generating, based on the initial solution identical to the initial solution in the instruction device, the solution that is identical to the solution generated by the instruction device solution generation means and synchronized with the solution generated in the instruction device solution generation means of the instruction device, and execution device key generation means for generating a key identical to the key generated in the instruction device key generation means based on the solution generated by the execution device solution generation means every time the encrypted instruction data is received from the instruction device by the reception means, and when decrypting the original data with a key generated in the execution device key generation means, the execution device decryption means is adapted to perform decryption with a different key.

In this case, the instruction device and the execution device generate a common key by using a common solution which is generated at least every time an instruction is given from the instruction device to the execution device, and perform communication based on a common key encryption method using the common key. This is an example of the complete encryption described above. According to this method, since a third party cannot falsify the encrypted instruction data unless the third party steels keys that change one after another, there is almost no room for success of a man-in-the-middle attack.

Note that in this case, the execution device key generation means may use the solution generated by the execution device solution generation means as it is as the key. In other words, the key generation means may be omitted.

The instruction device solution generation means and the execution device solution generation means are adapted to be capable of generating the same solution at remote locations. This can be implemented by diverting a one-time password mechanism which has been conventionally used. This situation is the same in the case of the second invention.

For example, the instruction device solution generation means and the execution device solution generation means may be adapted to generate a solution by substituting an initial solution into a mathematical expression containing the time at that time point as a variable. As a result, the instruction device solution generation means and the execution device solution generation means in the two independent devices located at spaced positions can generate synchronized solutions. This is close to a synchronization method called time-synchronization that has already been put into practical use for tokens, etc. which have been widely used in the field of Internet banking and the like.

The method for generating a solution in the instruction device solution generation means and the execution device solution generation means may be, for example, such a method that a past solution is substituted into a predetermined mathematical expression to obtain a new solution, and then the solution is substituted into the same mathematical expression to obtain a new solution. This is close to a synchronization method called event-synchronization that has already been put into practical use in tokens, etc. as described above. When event-synchronization is adopted, solutions generated by the instruction device solution generation means and the execution device solution generation means are identical to each other when solutions generated in the same order are compared with each other. For example, the instruction device solution generation means and the execution device solution generation means may be adapted to generate solutions by an algorithm in which a solution is set as X and a next solution is generated by a function $X_{n+1}=f(X_n)$, where X is a solution. In this case, the instruction device solution generation means and the execution device solution generation means may hold solutions which have been created immediately before, and delete all solutions which had been generated before that. In other words, it is possible for the instruction device solution generation means and the execution device solution generation means to hold only solutions necessary for generating next solutions. In this case, for example, when the instruction device solution generation means and the execution device solution generation means generate a fourth solution, a third solution $X_3$ stored therein is substituted into a mathematical expression of $X_{n+1}=f(x_n)$ like $X_4=f(X_3)$, thereby generating the fourth solution. When a plurality of past solutions are used, for example, a mathematical expression such as $X_{n+1}=f(X_n)+f(X_{n-1})$ is used, solutions to be stored in the instruction device solution generation means and the execution device solution generation means are two solutions which have been used just before. Thus, the number of solutions to be used in the instruction device solution generation means and the execution device solution generation means to generate a new solution is not limited to one as described above. In this case, there are two initial solutions. As described above, the initial solution is not necessarily limited to one solution, and there may be a plurality of initial solutions.

The instruction device may comprise a plurality of instruction devices, the initial solutions in the instruction devices may be different from one another, the execution device solution generation means may be adapted to generate, based on the initial solution identical to the initial solution in each of the instruction devices, the solution that is identical to the solution generated by the instruction device solution generation means possessed by each of the instruction devices and is synchronized with the solution generated in the instruction device solution generation means of each of the instruction devices, and every time the encrypted instruction data is received from each of the instruction devices by the reception means, the execution device key generation means may be adapted to generate a key identical to a key generated in the instruction device key generation means of the instruction device transmitting the encrypted instruction data based on the solution generated in the execution device solution generating means. As a result, the execution device can perform encrypted communication with a plurality of instruction devices while exchanging a common key as the common key as described above every time an instruction is given.

An invention of the present application according to a second invention is an execution device that is used in combination with an instruction device as a device capable of transmitting an instruction serving as a trigger for performing an operation, and performs an operation selected from scheduled operations which are a plurality of predetermined operations when receiving an instruction from the instruction device.

The instruction device used in combination with the execution device comprises instruction device encryption means for encrypting original data containing instruction data related to an instruction for specifying one operation from among the scheduled operations that can be executed by the execution device, thereby generating encrypted instruction data, and is configured to transfer the encrypted instruction data encrypted by the instruction device encryption means to the execution device, thereby performing the instruction.

Furthermore, the execution device comprises: reception means for receiving the encrypted instruction data; execution device encryption means for encrypting original data containing instruction data related to an instruction for specifying one operation from among the scheduled operations by a method which is identical to a method when the instruction device encryption means performs encryption for all instruction patterns, whereby a plurality of encrypted instruction data can be generated; and execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

A basic part of the execution device according to the second invention is identical to that of the execution device of the first invention.

The execution device according to the second invention is different from the execution device according to the first invention in that the execution device according to the second invention is configured to perform an operation selected from among scheduled operations which are a plurality of operations. The execution device of the first invention may also be configured to perform an operation selected from among scheduled operations which are a plurality of operations, but the execution device of the second invention is limited to such a configuration. In other words, in the case of the first invention, there is no particular limitation on the number or variation of the types of operations. However, in the case of the second invention, five or ten types of scheduled operations are determined in advance (of course, the five types or ten types of scheduled operations are shared by the instruction device and the execution device), and the execution device is configured to execute an operation selected from among the predetermined scheduled operations. Therefore, the execution device is also configured to receive encrypted instruction data from the instruction device, but the encrypted instruction data are data obtained by encrypting original data containing instruction data related to an instruction for specifying one operation from among the scheduled operations that can be performed by the execution device.

The execution device in the second invention does not decrypt the encrypted instruction data received from the instruction device. Accordingly, the execution device in the second invention does not have the execution device decryption means possessed by the execution device in the first invention, but has execution device encryption means instead. The execution device encryption means is adapted to be capable of performing the same encryption processing as the encryption processing performed by the instruction device encryption means of the instruction device. What is encrypted by the execution device encryption means is original data for all instruction patterns. As described above, the number and types of operations to be executed by the execution device in the second invention are finite. Therefore, the number of instruction patterns and the number and types of original data for giving instructions are also finite. As described above, the scheduled operations are shared between the instruction device and the execution device. Therefore, if the execution device encryption means sequentially encrypts all the original data corresponding to all the instruction patterns into encrypted instruction data, one of the encrypted instruction data ought to be coincident with encrypted instruction data received from the instruction device unless the encrypted instruction data is falsified. When one of a plurality of encrypted instruction data generated by the execution device encryption means coincide with encrypted instruction data received by the reception means, the execution means according to the second invention executes an operation specified by instruction data contained in original data which is a source of the encrypted instruction data.

In the case of the second invention, the actual authentication is performed depending on whether the execution device has generated the same encrypted instruction data as the encrypted instruction data transferred from the instruction device. In other words, the execution device encryption means of the execution device ought not to have generated the same encrypted instruction data unless the encrypted instruction data is authentic encrypted instruction data transferred by an authentic instruction device. In other words, if the execution device encryption means have generated the same encrypted instruction data as the encrypted instruction data transferred from the instruction device, it can be authenticated that the instruction device that has transferred the encrypted instruction data is authentic, but if not so, it is not authenticated that the instruction device that has transferred the encrypted instruction data is authentic.

As described above, even in the case of the second invention, if the encrypted instruction data are completely encrypted, the operation which is to be executed by the execution device and specified by the instruction data (encrypted instruction data) is not rewritten by a man in the middle. In addition, according to the second invention, by making the two-stage processing of the authentication based on transfer of authentication data and the instruction based on the transfer of instruction data into one-stage processing, a man-in-the-middle attack can be prevented, or even when a man-in-the-middle attack has been made, it can be made harmless.

Even in the case of the second invention, in order to avoid a man-in-the-middle attack, it is preferable that a common key encryption method using a common key is adopted as the encryption method used by the instruction device encryption means of the instruction device and the execution device encryption means of the execution device.

Note that the term "encryption" in the second invention means that data are converted so that a third party cannot read (understand) the data without special knowledge even when the third party views the data. This includes not only conversion allowing decryption as in the case of the first invention, but also a case of irreversible conversion like a case where a hash value is taken. For example, the encrypted instruction data transferred from the instruction device to the execution device may be data obtained, for example, by extracting a first half part, extracting a last half part, extracting even-numbered characters or characters of a multiple of 3, extracting only numerals from a character string having a mixture of alphabetical characters and numerals or the like from data obtained by encrypting original data in the instruction device decryption means of the instruction device so that the original data can be decrypted. Even in this case, the encryption processing to be executed by the execution device encryption means of the execution device performs the same processing as described above on the original data.

As described above, the execution device encryption means in the execution device according to the second invention is configured so that "a plurality of encrypted instruction data can be generated by performing encryption on all instruction patterns in the same method as that when the instruction device encryption means performs encryption". Furthermore, as described above, the execution means of the execution device of the second invention is configured so that "when one of a plurality of encrypted instruction data generated by the execution device encryption means is coincident with encrypted instruction data received by the reception means, an operation specified by instruction data contained in original data that is a source of the encrypted instruction data is executed as an operation". In other words, the execution device of the second invention executes processing of generating a plurality of encrypted instruction data (herein referred to as first processing), processing of comparing encrypted instruction data generated by the execution device with encrypted instruction data transferred from the instruction device, and seeking the same encrypted instruction data as the encrypted instruction data transferred from the instruction device from among the encrypted instruction data generated by the execution device (referred to herein as second processing), and processing in which the execution means performs an operation (referred to herein as third processing). Here, the second processing may be executed after the first processing has wholly terminated. In this case, in the first processing, by performing encryption on all the instruction patterns in the same method as that when the instruction device encryption means performs encryption, encrypted instruction data of "the same number as the number of the instruction patterns" are generated. On the other hand, the second processing may be executed before the first processing has terminated, that is, before the generation of the encrypted instruction data of "the same number as the number of the instruction patterns" has terminated, for example, every time encrypted instruction data is generated in the execution device encryption means. When the second processing is executed before the first processing has terminated, the second processing terminates before the first processing has terminated, that is, the same encrypted instruction data as the encrypted instruction data transferred from the instruction device is found from among the encrypted instruction data generated in the execution device. In this case, it is possible to execute the third processing and cancel the first processing halfway. In this case, encrypted instruction data of "a number smaller than the number of the instruction patterns" are generated. In other words, with respect to the first processing and the second processing described above, in principle, the encrypted instruction data transmitted from the instruction device is compared with the plurality of encrypted instruction data generated in the execution device in a round-robin style in order to find encrypted instruction data which is coincident with the encrypted instruction data transmitted from the instruction device, but it is not necessary to perform the round-robin comparison described above for all the encrypted instruction data. Description of "a plurality of encrypted instruction data can be generated by performing encryption on all the instruction patterns in the same method as that when the instruction device encryption means performs encryption" and "when one of a plurality of encrypted instruction data generated by the execution device encryption means is coincident with encrypted instruction data received by the reception means, an operation specified by instruction data contained in original data that is a source of the encrypted instruction data is executed as an operation" is meant to include all of the cases exemplified above.

Further, as described above, in the execution device according to the second invention, based on the fact that the execution device encryption means can generate the same encrypted instruction data as encrypted instruction data transferred from an instruction device, it is effectively authenticated that the instruction device which has transferred the encrypted instruction data is authentic. However, it is possible to perform other authentication in the execution device. In that case, for example, the instruction device may be configured to include appropriate authentication data in original data which is a source of encrypted instruction data, encrypt the original data containing instruction data and the authentication data into encrypted instruction data by the instruction device encryption means, and transfers the encrypted instruction data to the execution device.

The instruction data may be a code linked to each of the scheduled operations described above. In this case, a man in the middle usually cannot know how to link the scheduled operation and the code or the correspondence therebetween, so that it is almost impossible for the man in the middle to cause the execution device to perform his/her desired operation.

The execution device in the second invention can be configured as follows.

The instruction device in this case comprises: instruction device solution generation means capable of sequentially generating, based on an initial solution, a solution that is an enumeration of a predetermined number of pieces of at least one type of letters, numerals and symbols and is always generated as an identical one under a same condition; and instruction device key generation means for generating a key based on the solution generated by the instruction device solution generation means every time the encrypted instruction data is transferred to the execution device, and the instruction device encryption means is adapted to perform encryption with a different key every time the instruction device encryption means encrypts the original data by using a key generated by the instruction device key generation means.

The execution device used in combination with the instruction device as described above comprises: execution device solution generation means capable of generating, based on the initial solution identical to the initial solution in the instruction device, the solution that is identical to the solution generated by the instruction device solution generation means and synchronized with the solution generated in the instruction device solution generation means of the instruction device; and execution device key generation means for generating a key identical to the key generated in the instruction device key generation means based on the solution generated by the execution device solution generation means every time the encrypted instruction data is received from the instruction device by the reception means, and when decrypting the original data with a key generated in the execution device key generation means, the execution device decryption means is adapted to perform decryption with a different key.

In this case, the instruction device and the execution device generate a common key by using at least a common solution generated every time an instruction is given from the instruction device to the execution device, and use the common key to encrypt the original data by the instruction device encryption means and the execution device encryption means. This is an example of the complete encryption described above. According to this manner, since a third party cannot falsify the encrypted instruction data unless he/she steels keys that change one after another, there is almost no room for success of a man-in-the-middle attack.

Note that in this case, the execution device key generation means may use, as the key, a solution generated by the execution device solution generation means as it is. In other words, it means that the key generation means may be omitted.

In the case of the second invention, the instruction device may also comprise a plurality of instruction devices as in the case of the first invention. More specifically, the instruction device may comprise a plurality of instruction devices, the initial solutions in the plurality of instruction devices may be different from one another, the execution device solution generation means may be adapted to generate, based on the initial solution identical to the initial solution in each of the instruction devices, the solution that is identical to the solution generated by the instruction device solution generation means possessed by each of the instruction devices and is synchronized with the solution generated in the instruction device solution generation means of each of the instruction devices, and every time the encrypted instruction data is received from each of the instruction devices by the reception means, the execution device key generation means may be adapted to generate a key identical to a key generated in the instruction device key generation means of the instruction device transmitting the encrypted instruction data based on the solution generated in the execution device solution generating means. As a result, the execution device can perform encrypted communication with the instruction devices while exchanging a common key as the common key as described above every time an instruction is given.

In all cases of the case of the first invention and the case of the second invention, the execution device can be configured as follows.

The reception means of the execution device is adapted to receive encrypted instruction data from the instruction device. For example, when the first invention, the second invention of the present application is applied to the electronic lock system described in Background Art, the reception means receives encrypted data from the instruction device by wireless communication which is not passed via a network such as the Internet. On the other hand, the reception means of the execution device may be adapted to receive the encrypted instruction data from the instruction device via a network such as the Internet. When the first invention and the second invention of the present application are applied to an Internet banking system, the reception means will be adapted as described above.

The instruction device may be a terminal device used by a user, the instruction data may be an instruction for remittance from an account of the user to another account, and the execution device may be an Internet banking server that can instruct remittance from the account of the user to the other account. Of course, there are various application fields for the first invention and the second invention, and the contents of the instruction based on the instruction data are not limited to the foregoing contents, and the first invention and the second invention are applied to systems of Internet banking.

The inventor of the present application also proposes a method to be executed by the execution device of the first invention as one aspect of the first invention. The effect thereof is equal to the effect of the execution device according to the first invention. For example, it is as follows.

The method is a method to be implemented in an execution device that is used in combination with an instruction device which is a device capable of transmitting an instruction serving as a trigger for performing an operation, and performs an operation when receiving an instruction from the instruction device.

The instruction device comprises instruction device encryption means for encrypting original data containing instruction data related to an instruction for specifying one operation from among operations that can be performed by the execution device, thereby generating encrypted instruction data, and is configured to transfer the encrypted instruction data encrypted by the instruction device encryption means to the execution device, thereby performing the instruction.

The method comprises: a reception step of receiving the encrypted instruction data; an execution device decryption step of decrypting the encrypted instruction data to return the encrypted instruction data to the original data; and an execution step of performing, as the operation, an operation specified by the instruction data contained in the original data decrypted by the execution device decryption step when the encrypted instruction data has been returned to the original data by the execution device decryption step. The steps are executed by the execution device.

The inventor of the present application also proposes, for example, a computer program for causing a general-purpose computer to function as the execution device of the first invention as one aspect of the first invention. For example, it is as follows.

The computer program for causing a predetermined computer to function as an execution device that is used in combination with an instruction device which is a device capable of transmitting an instruction serving as a trigger for performing an operation, and performs an operation when receiving an instruction from the instruction device.

The instruction device comprises instruction device encryption means for encrypting original data containing instruction data related to an instruction for specifying one operation from among operations that can be performed by the execution device, thereby generating encrypted instruction data, and is configured to transfer the encrypted instruction data encrypted by the instruction device encryption means to the execution device, thereby performing the instruction.

The computer program causes the computer to execute: a reception step of receiving the encrypted instruction data; an execution device decryption step of decrypting the encrypted instruction data to return the encrypted instruction data to the original data; and an execution step of performing, as the operation, an operation specified by the instruction data contained in the original data decrypted by the execution device decryption step when the encrypted instruction data has been returned to the original data by the execution device decryption step.

The inventor of the present application also proposes a method to be executed by an execution device of the second invention as one aspect of the second invention. The effect thereof is equal to the effect of the execution device according to the second invention. For example, it is as follows.

The method is a method to be executed by an execution device that is used in combination with an instruction device as a device capable of transmitting an instruction serving as a trigger for performing an operation, and performs an operation selected from scheduled operations which are a plurality of predetermined operations when receiving an instruction from the instruction device.

The instruction device comprises instruction device encryption means for encrypting original data containing instruction data related to an instruction for specifying one operation from among the scheduled operations that can be executed by the execution device, thereby generating encrypted instruction data, and is configured to transfer the encrypted instruction data encrypted by the instruction device encryption means to the execution device, thereby performing the instruction.

The method comprises: a reception step of receiving the encrypted instruction data; an execution device encryption step of encrypting original data containing instruction data related to an instruction for specifying one operation from among the scheduled operations by a method identical to a method when the instruction device encryption means performs encryption for all instruction patterns, whereby a plurality of encrypted instruction data can be generated; and an execution step of performing, as the operation, an operation specified by the instruction data contained in the original data serving as a source of the encryption instruction data when one of the plurality of encrypted instruction data generated by the execution device encryption step is coincident with the encrypted instruction data received in the reception step. The steps are executed by the execution device.

The inventor of the present application also proposes, as an aspect of the second invention, a computer program for causing a general-purpose computer to function as the execution device of the second invention. For example, it is configured as follows.

The computer program is a computer program for causing a predetermined computer to function as an execution device that is used in combination with an instruction device as a device capable of transmitting an instruction serving as a trigger for performing an operation, and performs an operation selected from scheduled operations which are a plurality of predetermined operations when receiving an instruction from the instruction device.

The instruction device comprises instruction device encryption means for encrypting original data containing instruction data related to an instruction for specifying one operation from among the scheduled operations that can be executed by the execution device, thereby generating encrypted instruction data, and is configured to transfer the encrypted instruction data encrypted by the instruction device encryption means to the execution device, thereby performing the instruction.

The computer program is a computer program for causing the computer to execute: a reception step of receiving the encrypted instruction data; an execution device encryption step of encrypting original data containing instruction data related to an instruction for specifying one operation from among the scheduled operations by a method which is identical to a method when the instruction device encryption means performs encryption for all instruction patterns, whereby a plurality of encrypted instruction data can be generated; and an execution step of performing, as the operation, an operation specified by the instruction data contained in the original data serving as a source of the encryption instruction data when one of the plurality of encrypted instruction data generated by the execution device encryption step is coincident with the encrypted instruction data received in the reception step.

The inventor of the present application also proposes an instruction device used in combination with the execution device according to the first invention as one aspect of the invention of the present application. The effect of the instruction device according to the first invention is the same as the effect of the execution device according to the first invention.

An instruction device as an example is an instruction device that is a device capable of transmitting an instruction serving as a trigger for performing an operation and used in combination with an execution device which performs an operation when receiving an instruction from the instruction device. The instruction device is an instruction device comprising instruction device encryption means for encrypting original data containing instruction data related to an instruction for specifying one operation from among operations that can be performed by the execution device, thereby generating encrypted instruction data, and transfer means for transferring the encrypted instruction data encrypted by the instruction device encryption means to the execution device, thereby performing the instruction.

The execution device used in combination with the instruction device of the first invention described above comprises reception means for receiving the encrypted instruction data, execution device decryption means for decrypting the encrypted instruction data to return the encrypted instruction data to the original data, and execution means for performing, as the operation, an operation specified by the instruction data contained in the original data decrypted by the execution device decryption means when the encrypted instruction data has been returned to the original data by the execution device decryption means.

The inventor of the present application also proposes a method to be executed by the instruction device of the first invention as one aspect of the first invention. The effect is equal to the effect of the instruction device according to the first invention. For example, it is as follows.

The method is a method to be executed by an instruction device that is a device capable of transmitting an instruction serving as a trigger for performing an operation and used in combination with an execution device which performs an operation when receiving an instruction from the instruction device.

The method comprises an instruction device encryption step of encrypting original data containing instruction data related to an instruction for specifying one operation from among operations that can be performed by the execution device, thereby generating encrypted instruction data, and a transfer step of transferring the encrypted instruction data encrypted in the instruction device encryption step to the execution device, thereby performing the instruction. The steps are executed by the instruction device.

The execution device used in combination with the instruction device for executing the method according to the first invention described above comprises reception means for receiving the encrypted instruction data, execution device decryption means for decrypting the encrypted instruction data to return the encrypted instruction data to the original data, and execution means for performing, as the operation, an operation specified by the instruction data contained in the original data decrypted by the execution device decryption means when the encrypted instruction data has been returned to the original data by the execution device decryption means.

The inventor of the present application also proposes, for example, a computer program for causing a general-purpose computer to function as the instruction device of the first invention as one aspect of the invention of the present application. For example, it is as follows.

The computer program is a computer program for causing a predetermined computer to function as an instruction device that is a device capable of transmitting an instruction serving as a trigger for performing an operation and used in combination with an execution device which performs an operation when receiving an instruction from the instruction device.

The computer program is a computer program for causing the computer to execute an instruction device encryption step of encrypting original data containing instruction data related to an instruction for specifying one operation from among operations that can be performed by the execution device, thereby generating encrypted instruction data, and a transfer step of transferring the encrypted instruction data encrypted in the instruction device encryption step to the execution device, thereby performing the instruction.

The execution device used in combination with the instruction device which is implemented by causing a computer to function by the computer program according to the first invention described above comprises reception means for receiving the encrypted instruction data, execution device decryption means for decrypting the encrypted instruction data to return the encrypted instruction data to the original data, and execution means for performing, as the operation, an operation specified by the instruction data contained in the original data decrypted by the execution device decryption means when the encrypted instruction data has been returned to the original data by the execution device decryption means.

The inventor of the present application also proposes an instruction device used in combination with the execution device according to the second invention of the present invention as one aspect of the invention of the present application. The effect of the instruction device according to the second invention is the same as the effect of the execution device according to the second invention.

An instruction device as an example is an instruction device that is a device capable of transmitting an instruction serving as a trigger for performing an operation and used in combination with an execution device which performs an operation selected from scheduled operations which are a plurality of predetermined operations when receiving an instruction from the instruction device. The instruction device is an instruction device that comprises instruction device encryption means for encrypting original data containing instruction data related to an instruction for specifying one operation from among the scheduled operations that can be executed by the execution device, thereby generating encrypted instruction data, and transfer means for transferring the encrypted instruction data encrypted by the instruction device encryption means to the execution device, thereby performing the instruction.

The execution device used in combination with the instruction device according to the second invention described above comprises reception means for receiving the encrypted instruction data, execution device encryption means for encrypting original data containing instruction data related to an instruction for specifying one operation from among the scheduled operations by a method which is identical to a method when the instruction device encryption means performs encryption for all instruction patterns, whereby a plurality of encrypted instruction data can be generated, and execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

The inventor of the present application also proposes a method to be executed by the instruction device of the second invention as one aspect of the second invention. The effect is equal to the effect of the instruction device according to the second invention. For example, it is as follows.

The method is a method to be executed by an instruction device that is a device capable of transmitting an instruction serving as a trigger for performing an operation and used in combination with an execution device which performs an operation selected from scheduled operations which are a plurality of predetermined operations when receiving an instruction from the instruction device.

The method comprises an instruction device encryption step of encrypting original data containing instruction data related to an instruction for specifying one operation from among the scheduled operations that can be executed by the execution device, thereby generating encrypted instruction data, and a transfer step of transferring the encrypted instruction data encrypted in the instruction device encryption step to the execution device, thereby performing the instruction.

The execution device used in combination with the instruction device for executing the method according to the second invention described above comprises reception means for receiving the encrypted instruction data, execution device encryption means for encrypting original data containing instruction data related to an instruction for specifying one operation from among the scheduled operations by a method which is identical to a method when encryption is performed in the instruction device encryption step for all instruction patterns, whereby a plurality of encrypted instruction data can be generated, and execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

The inventor of the present application also proposes a computer program for causing, for example, a general-purpose computer to function as the instruction device of the second invention. For example, it is as follows.

The computer program is a computer program for causing a predetermined computer to function as an instruction device that is a device capable of transmitting an instruction serving as a trigger for performing an operation and used in combination with an execution device which performs an operation selected from scheduled operations which are a plurality of predetermined operations when receiving an instruction from the instruction device.

The computer program is a computer program for causing the computer to execute an instruction device encryption step of encrypting original data containing instruction data related to an instruction for specifying one operation from among the scheduled operations that can be executed by the execution device, thereby generating encrypted instruction data, and a transfer step of transferring the encrypted instruction data encrypted in the instruction device encryption step to the execution device, thereby performing the instruction.

The execution device used in combination with the instruction device which is implemented by causing a computer to function by the computer program according to the second invention described above comprises reception means for receiving the encrypted instruction data, execution device encryption means for encrypting original data containing instruction data related to an instruction for specifying one operation from among the scheduled operations by a method which is identical to a method when encryption is performed in the instruction device encryption step for all instruction patterns, whereby a plurality of encrypted instruction data can be generated, and execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

## Brief Description of Drawings

FIG. 1 is a diagram schematically showing an overall configuration of an Internet banking system according to a first embodiment;
FIG. 2 is a perspective view showing an appearance of a user terminal in the Internet banking system shown in FIG. 1;
FIG. 3 is a diagram showing a hardware configuration of the user terminal in the Internet banking system shown in FIG. 1;
FIG. 4 is a block diagram showing functional blocks generated inside the user terminal in the Internet banking system shown in FIG. 1;
FIG. 5 is a diagram conceptually showing an example of data recorded in a first recording unit of the user terminal in the Internet banking system shown in FIG. 1;
FIG. 6 is a diagram showing a hardware configuration of a settlement device in the Internet banking system shown in FIG. 1;
FIG. 7 is a block diagram showing functional blocks generated inside the settlement device in the Internet banking system shown in FIG. 1;
FIG. 8 is a diagram conceptually showing an example of data recorded in a second recording unit of the settlement device in the Internet banking system shown in FIG. 1;
FIG. 9 is a diagram showing a flow of processing to be executed in the Internet banking system shown in FIG. 1;
FIG. 10 is a diagram showing an example of an image to be displayed on a display of the user terminal shown in FIG. 2;
FIG. 11 is a block diagram showing functional blocks generated inside a user terminal according to a first modification;
FIG. 12 is a block diagram showing functional blocks generated inside a settlement device according to the first modification;
FIG. 13 is a block diagram showing functional blocks generated inside a settlement device according to a second embodiment;
FIG. 14 is a diagram showing a flow of processing to be executed in the Internet banking system in the second embodiment; and
FIG. 15 is a diagram showing another example of the image to be displayed on the display of the user terminal shown in FIG. 2.

## Description of Embodiments

Hereinafter, first and second embodiments of the present invention and modifications thereof will be described. In the description of the respective embodiments and modifications, the same reference signs are assigned to the same objects, and redundant description thereof is omitted in some cases. In addition, when there is no particular contradiction, each of the embodiments and the modifications can be combined with other embodiments and modifications.

<<First Embodiment>>

FIG. 1 schematically shows an overall configuration of an Internet banking system according to a first embodiment.

The Internet banking system is configured to include a plurality of user terminals 100-1 to 100-N (hereinafter, simply referred to as "user terminal 100") and a settlement device 200. All of these can be connected to a network 400.

Although the network 400 is not limited to the following configuration, in the present embodiment, the network 400 is the Internet.

Broadly defining, the user terminal 100 is an example of an instruction device of the invention of the present application, and more specifically, it is an example of a terminal device in the Internet banking system of the invention of the present application. Broadly defining, the settlement device 200 is an example of an execution device of the invention of the present application, and more specifically it corresponds to an example of an internet banking server in the Internet banking system of the invention of the present application.

As described later, as in the case of a well-known Internet banking system, a user accesses the settlement device 200 via the network 400 by using his/her own user terminal 100, whereby the user can remit money from his/her account to another person's account or can see the balance of his/her account or his/her deposit and withdrawal record.

Normally, the user terminal 100 is the property of each user. The user terminal 100 includes a computer. The user terminal 100 is a cellular phone, a smartphone, a tablet, a notebook computer, a desktop computer, or the like. Each of these devices may be a general-purpose device. The smartphone is, for example, an iPhone manufactured and sold by Apple Japan LLC. An example of the tablet is an iPad manufactured and sold by Apple Japan LLC. Hereinafter, although the user device is not limited to the following configuration, description will be advanced on the assumption that the user terminal is a smartphone.

The user terminal 100 is required to be capable of at least transmitting data to the settlement device 200, but may also be capable of receiving data from the settlement device 200. Since the user terminal 100 in the present embodiment is a smartphone, naturally, both reception and transmission of data via the network 400 are possible regardless of whether the other party is the settlement device 200 or not.

Next, the configuration of the user terminal 100 will be described. The configurations of the respective user terminals 100-1 to 100-N are the same in relation to the invention of the present application.

An example of the appearance of the user terminal 100 is shown in FIG. 2.

The user terminal 100 includes a display 101. The display 101 serves to display a still image or a moving picture, and a publicly-known or well-known display may be used. The display 101 is, for example, a liquid crystal display. The user terminal 100 also includes an input device 102. The input device 102 is used for a user to make a desired input to the user terminal 100. A publicly-known or well-known input device may be used as the input device 102. The input device 102 of the user terminal 100 in the present embodiment is configured as a button type, but it is not limited to this configuration, and it is possible to use a numeric keypad, a keyboard, a trackball, a mouse, or the like. When the display 101 is a touch panel, the display 101 also functions as the input device 102, and this is the case in the present embodiment.

Data input from the input device 102 will be described in detail later, but are, for example, payment information, balance viewing information, deposit and withdrawal record viewing information, selection information, user ID, and start information.

A hardware configuration of the user terminal 100 is shown in FIG. 3.

The hardware includes CPU (central processing unit) 111, ROM (read only memory) 112, RAM (random access memory) 113, and an interface 114, which are mutually interconnected by a bus 116.

The CPU 111 is an arithmetic unit for performing arithmetic operations. The CPU 111 executes processing described later by executing a computer program recorded in the ROM 112, for example. Note that the computer program described here includes at least a computer program for causing the user terminal 100 to function as a terminal device (instruction device) of the invention of the present application. This computer program may be preinstalled in the user terminal 100 or may be installed afterwards. The installation of the computer program to the user terminal 100 may be performed via a predetermined recording medium (not shown) such as a memory card, or may be performed via a network such as the Internet.

The ROM 112 records computer programs and data which are necessary for the CPU 111 to execute processing to be described later. The computer program recorded in ROM 112 is not limited to the above computer program, and when the user terminal 100 is a smartphone, a computer program and data necessary to cause the user terminal 100 to function as a smartphone, for example, to execute a telephone call or an e-mail are recorded. The user terminal 100 is also allowed to browse home pages based on data received via the network 400, and has a publicly-known web browser implemented therein to enable it.

The RAM 113 provides a work area which is necessary for the CPU 111 to perform processing.

Data transmission and reception is performed via the interface 114 between the external and the CPU 111, the RAM 113, etc. which are connected via a bus 116. The display 101 and the input device 102 described above are connected to the interface 114. An operation content input from the input device 102 is set to be input from the interface 114 to the bus 116, and image data described later is set to be output from the interface 114 to the display 101. The interface 114 is also connected to a transmission/reception unit (not shown).

The transmission/reception unit is adapted to transmit and receive data via the network 400 which is the Internet. Such communication may be performed by wire, but when the user terminal 100 is a smartphone, such communication is normally performed wirelessly. As long as it is possible, the configuration of the transmission/reception unit may be a publicly-known or well-known configuration. Data received from the network 400 by the transmission/reception unit is set to be received by the interface 114, and data (for example, encrypted instruction data described later) transferred from the interface 114 to the transmission/reception unit is transmitted via the network 400 to the outside, for example, the settlement device 200 by the transmission/reception unit.

The CPU 111 executes a computer program, whereby functional blocks as shown in FIG. 4 are generated inside the user terminal 100. Note that the following functional blocks may be generated by the function of the above-described computer program alone for causing the user terminal 100 to function as the terminal device (instruction device) of the invention of the present application, but may be generated by the cooperation between the above-described computer program and an OS or other computer programs installed in the user terminal 100.

In the user terminal 100, the following control unit 120 is generated in relation to the function of the invention of the present application. In the control unit 120 exits a main control unit 121, a data input/output unit 122, a first recording unit 123, and an encryption unit 124.

The control unit 120 executes information processing as described below.

The main control unit 121 performs overall control within the control unit 120. For example, in order to execute processing described later, the main control unit 121 controls the other functional blocks based on start data, described later, received from the data input/output unit 122, which will be described in detail later.

For example, the main control unit 121 is adapted to read a user ID described later from the first recording unit 123 with being triggered by reception of start data.

When the main control unit 121 has received payment information, balance viewing information, and deposit and withdrawal record viewing information, the main control unit 121 is adapted to transmit them to the encryption unit 124 while attaching data of the user ID to them. The payment information, the balance viewing information, and the deposit and withdrawal record viewing information to which the user ID is attached are examples of the original data of the invention of the present application.

The main control unit 121 may receive selection information. The selection information is information for selecting one of codes described later. When receiving the selection information, the main control unit 121 is adapted to read a code selected based on the received selection information from the first recording unit 123. The main control unit 121 is adapted to transmit the data of the code having the user ID attached thereto to the encryption unit 124. The data of the code having the user ID attached thereto is an example of the original data of the invention of the present application

The main control unit 121 may receive encrypted instruction data described later from the encryption unit 124. When receiving the encrypted instruction data, the main control unit 121 is adapted to attach a user ID of plain text to the encrypted instruction data, and then transmit the encrypted instruction data having the user ID affixed thereto to the data input/output unit 122.

The data input/output unit 122 performs input/output of data to/from the control unit 120.

Specifically, the data input/output unit 122 is adapted to receive start information, payment information, and the like input from the above-described input device 102 via the interface 114. When receiving data from the input devices 102, the data input/output unit 122 transmits the start data to the main control unit 121.

Encrypted instruction data with a user ID may be transmitted from the main control unit 121 to the data input/output unit 122. The data input/output unit 122 that has received the encrypted instruction data is adapted to transmit the data to the interface 114. The encrypted instruction data to which the user ID is attached is transmitted from the transmission/reception unit to the settlement device 200 via the network 400.

The first recording unit 123 records data. As described above, a user ID is recorded in the first recording unit 123 by the main control unit 121. Furthermore, as described later and a plurality of scheduled operations are recorded in the first recording unit 123 while associated with each other. The codes are a finite number of unique identifiers. The scheduled operations are operations which are different from one other, and any of them can be executed by the execution device. The codes and the scheduled operations recorded in the first recording unit 123 are as shown in FIG. 5, for example. Although not limited, in this example, there are four codes 1 to 4. A scheduled operation of "remit one million yen to account A" is linked to the code 1, a scheduled operation of "remit 100,000 yen to account A" is linked to the code 2, a scheduled operation of "remit one million yen to account B" is linked to the code 3, and a scheduled operation of "remit 100,000 yen to account B" is linked to the code 4. These codes and scheduled operations recorded in the first recording unit 123 of each user terminal 100 are shared with the settlement device 200 together with their corresponding relationship as described later. Note that the information sharing between each user terminal 100 and the settlement device 200 may be performed by communication between the user terminal 100 and the settlement device 200 via the network 400, for example, it may be performed by the user going to a bank to submit a predetermined form to the bank. A method of implementing the foregoing is not particularly limited.

As described above, the user ID is recorded in the first recording unit 123. The user ID is a unique identifier for each user or for each user terminal 100 used by each user, and it serves to identify each user. By using the user ID, the settlement device 200 can distinguish each user.

Although not limited to the following configuration, the first recording unit 123 is configured by a part of the RAM 113 when viewed as hardware.

Furthermore, the user IDs and the like recorded in the first recording unit 123 are read out by the main control unit 121 at a timing as described later.

The encryption unit 124 may receive original data from the main control unit 121. When receiving the original data, the encryption unit 124 is adapted to encrypt the original data to generate encrypted instruction data. The content of the original data includes the above-described payment information, etc., the codes, the user ID, and the like. Details of the original data will be described later.

The encryption performed by the encryption unit 124 may be different or may not be different among the user terminals 100. Although not limited to the following manner, in the present embodiment, it is assumed that the encryption method performed by the encryption unit 124 is different among the respective user terminals 100. More specifically, in the present embodiment, the encryption performed by the encryption unit 124 in each user terminal 100 uses the same algorithm, but has a different key among the user terminals 100. However, although not limited to the following manner, it is assumed that the encryption performed by the encryption unit 124 in each user terminal 100 is always based on the same method which always uses the same algorithm and always uses the same key.

The encryption unit 124 is adapted to transmit the generated encrypted instruction data to the main control unit 121.

Next, the settlement device 200 will be described.

The settlement device 200 is a general computer. More specifically, in the present embodiment, the settlement device 200 is a general server device. A hardware configuration thereof may be the same as a settlement device in a conventional Internet banking system, or a device equivalent to a server which is used in an Internet banking system and managed by a bank or the like.

The hardware configuration of the settlement device 200 is shown in FIG. 5.

The hardware includes CPU 211, ROM 212, RAM 213, an interface 214, and a large-capacity recording medium that is HDD (hard disk drive) 215 in the present embodiment, and these are mutually connected to one other by a bus 216.

The CPU 211 is a computing device for performing computing operations. For example, the CPU 211 executes processing described later by executing a computer program recorded in the ROM 212. Note that the computer program described here includes at least a computer program for causing the settlement device 200 to function as an Internet banking server (execution device) of the invention of the present application. This computer program may be preinstalled in the settlement device 200 or may be installed afterwards. The computer program may be installed in the settlement device 200 via a predetermined recording medium such as a memory card or via a network such as the Internet.

The ROM 212 records computer programs and data necessary for the CPU 211 to execute processing described later. The computer programs recorded in the ROM 212 are not limited to the foregoing, and other necessary computer programs may be recorded.

The RAM 213 provides a work area necessary for the CPU 211 to perform processing.

The interface 214 is adapted to exchange data between the external and the CPU 211, RAM 213 and the like which are connected to one another via the bus 216. The interface 214 is connected to at least the transmission/reception unit. Data received from the network 400 by the transmission/reception unit is received by the interface 214, and data passed from the interface 214 to the transmission/reception unit is transmitted to the outside, for example, the user terminal 100 via the network 400 by the transmission/reception unit.

The HDD 215 is a large-capacity recording medium as described above, and records data. At least a part of the computer program and data necessary for the CPU 211 to execute processing described later may be recorded in the HDD 215 instead of the ROM 212, and it is more practical that most of the computer program and the data are recorded in the HDD 215.

The CPU 211 executes the computer program, whereby functional blocks as shown in FIG. 7 are generated inside the settlement device 200. Note that the following functional blocks may be generated by the function of the above-described computer program alone for causing the settlement device 200 to function as the Internet banking server (execution device) of the invention of the present application, but may be generated by the cooperation between the above-described computer program and an OS or other computer programs installed in the settlement device 200.

The following control unit 220 is generated in the settlement device 200 in relation to the function of the invention of the present application. In the control unit 220 are generated a data input/output unit 221, a main control unit 222, a decryption unit 223, a determination unit 224, and a second recording unit 225.

The data input/output unit 221 inputs/outputs data to/from the control unit 220. Specifically, the data input/output unit 221 receives data described later from the main control unit 222.

For example, the data input/output unit 221 is adapted to receive result data and execution data described later from the main control unit 222. The received result data is transmitted from the data input/output unit 221 to the transmission/reception unit, and transmitted to the user terminal 100 via the network 400. The execution data is transmitted to the execution unit (not shown) described later.

The data input/output unit 221 receives, from the transmission/reception unit, data which has received from the user terminal 100 via the network 400 by the transmission/reception unit, and transmits the received data to the main control unit 222. For example, the data input/output unit 221 may receive encrypted instruction data with a user ID from the transmission/reception unit, and the data input/output unit 221 that has received the encrypted instruction data transmits the encrypted instruction data to the main control unit 222.

The main control unit 222 performs overall control in the control unit 220.

For example, the main control unit 222 may receive encrypted instruction data with a user ID from the data input/output unit 221. The main control unit 222 that has received the encrypted instruction data having the user ID attached thereto is adapted to transmit the encrypted instruction data having the user ID attached thereto to the decryption unit 223.

Further, the main control unit 222 may receive determination data described later from the determination unit 224 described above. Instruction data or a code may be attached to the determination data. Two types of determination data exist as described later, but instruction data or a code may be attached to positive determination data described later. When positive determination data is received and instruction data is attached to the determination data, the main control unit 222 is adapted to generate execution data for causing an operation specified by the instruction data to be executed. When positive determination data is received and data of a code is attached to the determination data, the main control unit 222 reads out data related to a scheduled operation recorded in the second recording unit 225 as described later based on the user ID and the code data, and generate execution data for causing an operation specified by the data related to the scheduled operation to be executed. In any case, the main control unit 222 transmits the generated execution data to the data input unit 221.

Furthermore, the main control unit 222 generates result data regardless of whether the determination data is positive or negative, and transmits the result data to the data input/output unit 221.

The decryption unit 223 has a function of decrypting encrypted instruction data with a user ID when receiving the encrypted instruction data having the user ID attached thereto from the main control unit 222. Encrypted instruction data are transmitted from a large number of user terminals 100 to the decryption unit 223. With respect to the encrypted instruction data transmitted from a large number of user terminals 100, the same algorithm was used to encrypt them, but different keys used for encryption were different as described above. In order to decrypt them, the decryption unit 223 records the user IDs recorded in the first recording units 123 of all of the user terminals 100 and the keys used in the encryption units 124 of the user terminals 100 to which the user IDs are attached while the user IDs are linked to the keys, respectively. How the decryption unit 223 decrypts the encrypted instruction data will be described later. When the decryption unit 223 performs decryption, the user ID and the key data which are associated with each other are used.

When the decryption unit 223 has decrypted the encrypted instruction data, the encrypted instruction data returns to the original data. As described above, the original data is transmitted to the determination unit 224 together with the user ID attached to the encrypted instruction data.

The determination unit 224 determines whether the encrypted instruction data transmitted from the user terminal 100 to the settlement device 200 is authentic, that is, whether a user who has sent the encrypted instruction data is a genuine user. This determination is referred to as authentication determination.

As described above, the original data obtained by decrypting the encrypted instruction data and the user ID which has been transmitted to the decryption unit 223 while attached to the encrypted instruction data and then transferred from the decryption unit 223 are transmitted from the decryption unit 223 to the determination unit 224. By using these data, the decryption unit 223 performs authentication determination.

Details of the authentication determination to be executed by the determination unit 224 will be described later, and the determination unit 224 makes any one of a positive determination indicating that the encrypted instruction data transmitted from the user terminal 100 to the settlement device 200 is authentic, and a negative determination indicating that the encrypted instruction data transmitted from the user terminal 100 to the settlement device 200 is not authentic. The determination unit 224 is adapted to generate positive or negative determination data based on a result of the determination, and transmit the generated determination data to the main control unit 222 in any case. Note that when the determination data transmitted to the main control unit 222 is positive, instruction data or code data is attached to the determination data.

The second recording unit 225 records linked codes and scheduled operations recorded in each user terminal 100 while the user ID of the user terminal 100 having the linked codes and scheduled operations recorded therein is further linked to the linked codes and scheduled operations with respect to all the user terminals 100.

The data recorded in the second recording unit 225 is, for example, one as shown in FIG. 8. In short, codes and scheduled operations which are recorded in a first recording unit 123 are recorded in the second recording unit 225 as they are while linked to a user ID allocated to a user terminal 100 having the first recording unit 123 in which the codes and the scheduled operations are recorded. In the present embodiment, although not limited to the following manner, the user ID is set to an integer serial number starting from 1. FIG. 8 shows codes and scheduled operations for four users up to user ID: 4, but the number of users is usually larger. In FIG. 8, codes and scheduled operations for users having user ID: 5 or more are omitted from illustration. Further, for the user having the user ID: 3, neither a code nor a scheduled operation is recorded, which indicates that neither a code nor a scheduled operation is also recorded in the first recording unit 123 of the user terminal 100 of the user. As described above, in the user terminal 100, recording of the code and the scheduled operation may be omitted in the first recording unit 123.

Next, a using method and an operation of the Internet banking system as described above will be described with reference to FIG. 9.

First, as preparation for using such a system, a user ID is set in each user terminal 100.

The user ID is a unique ID in each user terminal 100 to identify each user terminal 100, and is generally a list of letters, numbers, or symbols. In order to prevent a large number of user IDs from overlapping one another, the settlement device 200 may issue a user ID for each user terminal 100. Alternatively, an individual identification number embedded in the hardware of a user terminal 100 from the time of shipment can be used as a user ID.

A manager of each user terminal 100 inputs a user ID for the user terminal 100 by operating the input device 102. Note that this input operation is not necessary when the individual identification number is used as the user ID. The data of the user ID is transmitted from the input device 102 to the interface 114, and transmitted from the interface 114 to the control unit 120. The data input/output unit 122 of the control unit 120 receives this data, and transmits the data to the main control unit 121. The main control unit 121 holds the data or records the data in the main control unit 121.

Furthermore, the main control unit 121 transmits the data of the user ID to the data input/output unit 122. The data of the user ID is transmitted from the data input/output unit 122 to the transmission/reception unit, and then transmitted to the settlement device 200 via the network 400.

The settlement device 200 receives the data of the user ID at the transmission/reception unit. The data of the user ID is transmitted from the transmission/reception unit to the interface 214, and transmitted from the interface 214 to the control unit 220. The data input/output unit 221 of the control unit 220 receives this data, and transmits the data to the main control unit 222. The main control unit 222 holds the data or records the data in the main control unit 222. By performing this processing on all the user terminals 100, the main control unit 222 has a list of user IDs for all the user terminals 100.

Data of codes and scheduled operations which have been linked to each other as shown in FIG. 5 are recorded in the first recording unit 123 of each user terminal 100. Further, data of codes and scheduled operations recorded in each user terminal 100 while linked to each other are recorded in the second recording unit 225 of the settlement device 200 while the codes and the scheduled operations are linked to the user ID of the user terminal 100 having the first recording unit 123 in which the codes and the scheduled operations are recorded as shown in FIG. 8.

A user using the Internet banking system generates start information by operating the input device 102 of the user terminal 100 possessed by himself/herself (S801). The start information is generated, for example, by the user touching an icon for starting software of the Internet banking system included on the top screen displayed on the display 101 of the user terminal 100.

The start information is transmitted from the input device 102 via the interface 114 to the data input/output unit 122 in the control unit 120. The data input/output unit 122 transmits the start information to the main control unit 121.

When receiving the start information, the main control unit 121 reads out the data of the user ID from the first recording unit 123, and holds the data. Note that read-out of the data of the user ID from the first recording unit 123 may be performed at an appropriate timing until generation of original data described later.

Next, an image for prompting the user to input is displayed on the display 101. The main control unit 121 displays such an image. The main control unit 121 generates image data for an image to be displayed on the display 101 and transmits the image data to the data input/output unit 122. Such image data is transmitted from the data input/output unit 122 to the display 101 via the interface 114, whereby an image for prompting the user to input is displayed on the display 101.

Here, what the user inputs is any of payment information, balance viewing information, deposit/withdrawal record viewing information, and selection information. Among these information pieces, the payment information, the balance viewing information, and the deposit/withdrawal record viewing information are different from the selection information in the inputting manner thereof. With respect to the payment information, the balance viewing information, and the deposit/withdrawal record viewing information, the user directly inputs the contents thereof (such an input style is referred to as "direct input" for convenience). On the other hand, with respect to the selection information, the user selects from the scheduled operations recorded in the first recording unit 123 (such an input style is referred to as "selection input" for convenience). The image displayed on the display 101 to promote the user to input is, for example, to cause the user to select either the direct input or the selection input.

When the user selects an input of the payment information, the balance viewing information, or the deposit/withdrawal record viewing information, the user may select the direct input, and when the user desires an input of the selection information, the user may select the selection input. Such selection is performed by operating the input device 102. As in the case described above, an operation content for performing such selection is transmitted from the interface 114 to the main control unit 121 via the data input/output unit 122.

For example, it is assumed that the direct input is selected. When the direct input is selected, the main control unit 121 causes the display 101 to display an image for promoting the user to select which one of the payment information, the balance viewing information, and the deposit/withdrawal record viewing information is desired to be input by the user. The control of an image to be displayed on the display 101 is performed by generation of image data by the main control unit 121 as in the case when an image for prompting the user to input is displayed on the display 101.

For example, it is assumed that an input of the payment information has been selected by the user. The payment information is information for allowing the user to instruct the settlement device 200 to make a payment from his/her account to another account, and includes information for specifying the account of a remittance destination (bank name, branch name, account number, account holder), and information for specifying the amount of money to be remitted. In this case, an image to be displayed on the display 101 will be, for example, one as shown in FIG. 10. The user fills corresponding contents in boxes under the characters of bank name, branch name, account number, account holder, and amount of money to be remitted shown in FIG. 10, whereby an input of the payment information is performed. For example, it is assumed that an input of the balance viewing information has been selected by the user. The balance viewing information is information for allowing the user to make an instruction of requesting viewing of the current balance of his/her account to the settlement device 200. In this case, the balance viewing information is generated at the time point when the user selects the input of the balance viewing information. For example, it is assumed that an input of the deposit/withdrawal record viewing information has been selected by the user. The deposit/withdrawal record viewing information is information for allowing the user to make an instruction of requesting viewing of a deposit/withdrawal record related to his/her account to the settlement device 200, and includes information for specifying a period of time (for example, the time of commencement and the time of termination) of the deposit/withdrawal record which the user desires to view. In this case, the user performs an input for specifying the period of time of the deposit/withdrawal record desired to be viewed, whereby the deposit/withdrawal record viewing information has been input. These payment information, balance viewing information, and deposit/withdrawal record viewing information are examples of instruction data in the invention of the present application.

For example, when payment information is input by the user, the input content thereof is transmitted from the input device 102 to the main control unit 121 via the interface 114 and the data input/output unit 122. The main control unit 121 attaches data of the user ID to the payment information. In this way, data in which the user ID is attached to the payment information becomes original data. Note that even when balance viewing information or deposit/withdrawal record viewing information is input to the main control unit 121, the main control unit 121 attaches the data of the user ID to the input balance viewing information or deposit/withdrawal record viewing information. In these cases, data in which the user ID is attached to the balance viewing information or data in which the user ID is attached to the deposit/withdrawal record viewing information becomes original data.

It is assumed that the selection input is selected by the user. In this case, all of codes and scheduled operations recorded in the first recording unit 123 are displayed on the display 101, for example, when the content shown in FIG. 5 is recorded in the first recording unit 123, all of four pairs of codes and scheduled operations linked to the codes respectively are displayed on the display 101. When such a display is performed, the main control unit 121 reads out the data of the codes and the scheduled operations from the first recording unit 123, and generates image data for an image to be displayed on the display 101 based on the read-out data. The main control unit 121 transmits such image data to the display 101 via the data input/output unit 122 and the interface 114, whereby the codes and the scheduled operations are displayed on the display 101 as shown in FIG. 5.

The user checks the contents of the displayed scheduled operations, and then selects one pair of the paired codes and scheduled operations, or a code. Such selection is performed by user's operation on the input device 102. Data from the input device 102 is transmitted to the main control unit 121 as described above. The main control unit 121 reads out the code selected based on the above data from the first recording unit 123. For example, it is assumed that "code 1" is selected. The main control unit 121 attaches the data of the user ID to data which is "code 1" or "1". In this way, the data in which the user ID is attached to the code becomes the original data in this case. Note that an operation content itself specified by the code which is the code 1 may be contained in the original data instead of or in addition to the data which is the code 1 or 1.

In any case, the main control unit 121 generates original data (S802). The main control unit 121 transmits the generated original data to the encryption unit 124.

When receiving the original data from the main control unit 121, the encryption unit 124 encrypts the original data into encrypted instruction data (S803).

In the present embodiment, the encryption performed by the encryption unit 124 is different among the user terminals 100. Although not limited to the following manner, in the present embodiment, the encryption to be performed by the encryption unit 124 in each user terminal 100 uses the same algorithm, but uses a different key among the user terminals 100. The encryption unit 124 holds an algorithm and a key which are used in the encryption step used in the user terminal 100. By using the algorithm and the key, the encryption unit 124 encrypts the original data, which results in generation of encrypted instruction data.

The encryption unit 124 transmits the generated encrypted instruction data to the main control unit 121.

The main control unit 121 receives the encrypted instruction data from the encryption unit 124. Upon receiving the encrypted instruction data, the main control unit 121 attaches user ID of a plain text to the encrypted instruction data (S804). The encrypted instruction data to which the user ID is attached is transmitted from the main control unit 121 to the data input/output unit 122.

The encrypted instruction data having the user ID attached thereto is transmitted to the settlement device 200 via the interface 114, the transmission/reception unit, and further the network 400 (S805).

The settlement device 200 receives the encrypted instruction data having the user ID attached thereto at the transmission/reception unit (S901).

The encrypted instruction data having the user ID attached thereto is transmitted to the data input/output unit 221 of the control unit 220 via the interface 214. The data input/output unit 221 transmits the encrypted instruction data having the user ID attached thereto to the main control unit 222.

When receiving the encrypted instruction data having the user ID attached thereto, the main control unit 222 determines whether one of user IDs contained in a user ID list for all the user terminals 100 which is possessed by the main control unit 222 coincides with the user ID attached to the encrypted instruction data. This may also be considered as a part of authentication determination described later. However, if the user ID attached to the encrypted instruction data does not coincide with any of the user IDs contained in the list, the main control unit 222 ceases the subsequent processing because it is determined that the user terminal 100 that has transmitted the encrypted instruction data having the user ID attached thereto is not authentic. On the other hand, when the user ID attached to the encrypted instruction data coincides with any one of the user IDs contained in the list, the main control unit 222 transmits, to the decryption unit 223, the encrypted instruction data having the user ID attached thereto as it is.

When receiving the encrypted instruction data having the user ID attached thereto from the main control unit 222, the decryption unit 223 decrypts the encrypted instruction data (S902).

Encrypted instruction data from a large number of user terminals 100 are transmitted to the decryption unit 223. For the encrypted instruction data transmitted from a large number of user terminals 100, algorithms used to encrypt them are the same, but keys used for the encryption are different. The decryption unit 223 stores an algorithm necessary for decryption (which is one algorithm in the present embodiment). On the other hand, the decryption unit 223 must specify a key to be used for decrypting the encrypted instruction data. As described above, the user IDs recorded in the first recording units 123 of all the user terminals 100 and the keys to be used by the encryption units 124 in the user terminals 100 having the user IDs attached thereto respectively are recorded in the decryption unit 223 while the user IDs are linked to the keys. The decryption unit 223 identifies, as a key for decrypting the encrypted instruction data, a key linked to a user ID which is recorded in the decryption unit 223 and is identical to the user ID transmitted from the main control unit 222 together with the encrypted instruction data.

Then, the decryption unit 223 decrypts the encrypted instruction data by using the algorithm described above and the key specified by using the user ID as described above. The original data are resultant data. Since the decryption unit 223 uses the same key as the encryption unit 124 in the user terminal 100 that has transmitted the encrypted instruction data, the encrypted communication performed between the user terminal 100 and the settlement device 200 can be regarded as common key encryption type communication.

The original data are transmitted to the determination unit 224 together with the user ID attached to the encrypted instruction data.

Note that when the encrypted instruction data cannot be decrypted in the decryption unit 223, the decryption unit 223 notifies this fact to the determination unit 224.

The determination unit 224 receives the original data from the decryption unit 223 together with the user ID attached to the encrypted instruction data. By using these data, the determination unit 224 performs authentication determination (S903).

In the present embodiment, it is determined whether the user ID contained in the original data coincides with the user ID transmitted from the decryption unit 223 with being attached to the original data. As a result, when both the user IDs coincide with each other, the determination unit 224 makes a positive determination indicating that the encrypted instruction data transmitted from the user terminal 100 to the settlement device 200 is authentic. As described above, the user ID is contained in the original data. The original data is thereafter encrypted into encrypted instruction data. The encrypted instruction data contains the user ID contained in the original data with the user ID being encrypted. If the user ID contained in the original data obtained by decrypting the encrypted instruction data transmitted from the user terminal 100 coincides with the user ID which has been transmitted from the user terminal 100 to the settlement device 200 while the user ID is attached to the encrypted instruction data in the form of a plain text and further transmitted to the determination unit 224 via the transmission/reception unit, the interface 214, the data input/output unit 221, the main control unit 222, and the decryption unit 223, it could be estimated that the encrypted instruction data has not been subjected to injustice such as falsification or the like. Based on such a principle, the determination unit 224 makes a positive determination when both the user IDs coincide with each other. On the other hand, when both the user IDs do not coincide with each other, the determination unit 224 makes a negative determination indicating that the encrypted instruction data transmitted from the user terminal 100 to the settlement device 200 is not authentic. Note that the determination unit 224 makes a negative determination even when receiving from the decryption unit 223 a notification that the encrypted instruction data could not be decrypted.

As a result of the above determination, the determination unit 224 generates positive determination data or negative determination data.

Regardless of whether the determination data is positive or negative, the determination unit 224 attaches the user ID attached to the encrypted instruction data from the user terminal 100, and transmits the determination data to the main control unit 222. When the determination data is positive, the payment information, the balance viewing information, or the deposit/withdrawal record viewing information, or the code which is contained in the original data and is an example of the instruction data in the invention of the present application is transmitted to the main control unit 222.

It goes without saying that by the fact that the encrypted instruction data could be decrypted by the decryption unit 223, it is possible to regard that it can have been proved that the encrypted instruction data has not been falsified, or the encrypted instruction data transmitted from the user terminal 100 to the settlement device 200 is authentic. If such a treatment is performed, the determination unit 224 and the authentication determination processing performed by the determination unit 224 may be omitted. In this case, the decryption unit 223 may transmit, to the main control unit 222, the above-described data to be transmitted to the determination unit 224.

As described above, the determination data is transmitted to the main control unit 222 together with other data.

It is assumed that the determination data is positive. In addition to the user ID, instruction data that is payment information, balance viewing information, or deposit/withdrawal record viewing information, or a code is attached to the positive determination data. Based on these, the main control unit 222 causes the execution unit (not shown) to execute an operation specified by the instruction data or the like (S904).

When the instruction data is attached to the positive determination data, the main control unit 222 generates data for causing the execution unit (not shown) to execute the operation specified by the instruction data, and transmits the data to the execution unit via the data input/output unit 221. The execution unit may exist in a device outside the settlement device 200, but has a function of performing general management of each user's bank account. Based on the received data, for example, when the instruction data is payment information, the execution unit remits the amount of money specified by the user to an account specified by the user; when the instruction data is balance viewing information, the execution unit transmits, to the user terminal 100, data necessary for displaying the balance of the user's account at that time on the display 101 of the user terminal 100; and when the instruction data is deposit/withdrawal record viewing information, the execution device transmits, to the user terminal 100, data necessary for displaying a deposit/withdrawal record of the user's account in a period of time specified by the user on the display 101 of the user terminal 100. At this time, which user such processing is performed for is determined based on the user ID attached to the positive determination data.

Furthermore, when a user ID and a code are attached to the positive determination data, the main control unit 222 reads out, from the second recording unit 225, data of a scheduled operation linked to the code from data of scheduled operations specified by the user ID. As a result, the main control unit 222 that has obtained the data of the scheduled operation generates data for causing the execution unit (not shown) to execute an operation specified by the data of the scheduled operation like the foregoing case where instruction data has been obtained from the determination unit 224, and transmits the data to the execution unit via the data input/output unit 221. The execution unit that has received the data executes the operation specified by the data.

When the determination data is negative, the main control unit 222 does not perform the operation as described above.

Furthermore, the main control unit 222 generates result data regardless of whether the determination data is positive or negative (S905). The main control unit 222 transmits the result data to the data input/output unit 221. The result data indicates whether the user's instruction has been executed by the settlement device 200. The result data may be positive or negative, and whether the result data is positive or negative follows whether the determination data is positive or negative.

The main control unit 222 transmits the generated result data to the transmission/reception unit via the data input/output unit 221 and the interface 214 together with the user ID attached to the determination data. The transmission/reception unit transmits the result data to the user terminal 100 specified by the user ID via the network 400 (S906).

The user terminal 100 receives the result data at the transmission/reception unit (S806).

The result data received by the transmission/reception unit is transmitted to the main control unit 121 via the interface 114 and the data input/output unit 122.

The main control unit 121 receiving the result data generates, based on the result data, an image indicating whether an operation instructed by the user has been executed by the settlement device 200, and transmits the image data to the display 101 like the foregoing case, whereby the image based on the image data is displayed on the display 101. By viewing the image, the user can know whether the operation instructed by the user has been executed by the settlement device 200.

Furthermore, as described above, data necessary for displaying the balance of the user's account at that time point to be displayed on the display 101 of the user terminal 100, and data necessary for displaying a deposit/withdrawal of the user's account over a period of time specified by the user may be transmitted from the settlement device 200 to the user terminal 100. Such data are also transmitted to the main control unit 222, and the main control unit 222 that has received these data causes the display 101 to display an appropriate image based on these data.

Note that in the Internet banking system described above, both the data based on the direct input and the data based on the selection input can be treated, but the user terminal 100 and the settlement device 200 may be configured to treat only one of these data.

<First Modification>

The Internet banking system according to the first modification is almost the same as the Internet banking system according to the first embodiment. The configurations of the user terminal 100 and the settlement device 200 and the processing executed therein are not different from those in the first embodiment except for portions described later.

In the Internet banking system according to the first embodiment, the encryption methods used for encryption of original data to be executed by the respective encryption units 124 of the plurality of user terminals 100 are always the same method using the same algorithm and the same key. In addition, the decryption method to be executed by the decryption unit 223 of the settlement device 200 is always the same method using the same algorithm and the same key in terms of encrypted instruction data transmitted from the same user terminal 100.

In the first modification, the encryption method to be executed by the encryption unit 124 of each of the plurality of user terminals 100 is set to be changed every time the encryption method encrypts original data to generate encrypted instruction data. It is possible to change the algorithm in order to change the encryption method in each encryption unit 124. However, in the first modification, the key is changed every time encryption is performed. Furthermore, in the first modification, the decryption method to be executed in the decryption unit 223 of the settlement device 200 is also changed every time decryption is performed from the viewpoint of decryption of encrypted instruction data transmitted from the same user terminal 100.

In order to implement such a mechanism, when attention is paid to the encryption unit 124 of a certain user terminal 100 and the decryption unit 223 of the settlement device 200, it is necessary to change the key in a so-called synchronized state. The user terminal 100 and the settlement device 200 according to the first modification have a mechanism for executing encryption or decryption processing by using a key changing in a state where the encryption unit 124 and the decryption unit 223 are synchronized with each other.

Hereinafter, the mechanism will be described.

In the user terminal 100 of the first modification, a control unit 120 that includes functional blocks is also generated in the user terminal 100 by executing a computer program as in the case of the first embodiment. As shown in FIG. 11, the functional blocks generated in the control unit 120 in the first modification are substantially the same as those in the first embodiment, and the function carried by the same functional block is the same as that in the first embodiment except for the encryption unit 124. The functional blocks generated in the control unit 120 in the first modification include a key generation unit 125 and a key data recording unit 126 that do not exist in the case of the first embodiment, and this is only a different point from the first embodiment.

The key generation unit 125 is adapted to generate a key to be used for encryption, and provide the key to the encryption unit 124. The key data recording unit 126 records data which the key generation unit 125 uses to generate a key.

A method of generating a key in the key generation unit 125 and a timing of providing the key to the encryption unit 124 will be described.

The timing at which the key generation unit 125 provides a key to the encryption unit 124 is a timing at which the encryption unit 124 performs encryption processing. As described above, original data are transmitted to the encryption unit 124. At this timing, the encryption unit 124 transmits data for requesting the key generation unit 125 to generate a key. Upon reception of the data, the key generation unit 125 generates a key and transmits data of the generated key to the encryption unit 124. The encryption unit 124 encrypts the original data by using an invariant algorithm and the provided key, thereby obtaining encrypted instruction data as in the case of the first embodiment.

For example, the key generation unit 125 generates a key as follows. The key is generated as a "solution" in the following description, and it is generated as an enumeration of at least one of letters, numbers, and symbols. The solution can be set so that the same is always generated under a certain condition like a pseudo-random number sequence having an initial value dependency. An example is a publicly-known or well-known method of generating one-time passwords in which one-time passwords are sequentially generated from a certain initial value.

In the present embodiment, in order to generate a solution, a method in which a certain initial value (may be two or more values) is used and a past solution is substituted into a predetermined function to sequentially generate a new solution is executed every time a solution is needed. By executing this method, a solution which is the above "value" can be sequentially generated. Such a solution becomes a pseudo-random number having an initial value dependency.

The following (a) to (c) are given as examples of the function used to create the above "solution". Each of the following (a) to (c) is an expression for creating $X_N$ which is an N-th "solution". P, Q, R, and S represent natural numbers.

(a)

$$(X_N) = (X_{N-1})^P + (X_{N-2})^Q$$

(b)

$$(X_N) = (X_{N-1})^P$$

(c)

$$(X_N) = (X_{N-1})^P (X_{N-2})^Q (X_{N-3})^R (X_{N-4})^S$$

In (a), a new "solution" is generated by using two past "solutions" and summing up the P power and Q power of the past solutions, respectively. Note that, to be exact, when past two "values" are used and the P power and Q power of them are summed up, the number of digits increases, and thus a new "solution" is generated by extracting an appropriate number of digits from the head of an obtained value, extracting an appropriate number of digits from the tail of the obtained value, or extracting an appropriate number of digits from an appropriate part of the value.

In (b), one past "solution" is used, and the number of digits of the P power thereof is rearranged to set a new "solution".

In (c), past four "solutions", the product of P power, Q power, R power, and S power of them respectively is taken, and then the number of digits of the product is rearranged to set a new "solution" as described above.

The above-mentioned (a) to (c) are an example of an algorithm for generating a solution, and it is possible to make a change to the algorithm when a solution is generated, for example, to make a change by using the above-mentioned (a) to (c) in order.

When the solution is generated by such a method, a solution which is first generated based on a certain initial value is always the same, a solution which is secondly generated is also always the same, and likewise a solution which is generated at the N-th is also always the same. This is the initial value dependency.

When a solution as an initial value necessary for initially generating a first solution, for example, the above expression (a) is used, $(X_0)$ and $(X_{-1})$ are recorded in the key data recording unit 126, when the above expression (b) is used, $(X_0)$ is recorded in the key data recording unit 126, and when the above expression (c) is used, $(X_0)$, $(X_{-1})$, $(X_{-2})$, $(X_{-3})$ are recorded in the key data recording unit 126. Note that the initial value is unique for each user terminal 100.

When a first solution is generated, the key generation unit 125 reads out an initial value from the key data recording unit 126 and generates the first solution $(X_1)$. At the same time, the key generation unit 125 transmits the generated solution to the key data recording unit 126, and increments the initial value by +1. In other words, under a state after the first solution is generated by the key generation unit 125, in the key data recording unit 126 are recorded $(X_1)$ and $(X_0)$ when the above expression (a) is used, $(X_1)$ when the above expression (b) is used, and $(X_1)$, $(X_0)$, $(X_{-1})$, $(X_{-2})$ when the above expression (c) is used, respectively.

In any case of using any one of the expressions (a) to (c), when a second solution $(X_2)$ is generated, the above-described solution recorded in the key data recording unit 126 after the first solution is generated may be used. Then, solutions $(X_N)$ generated in the same order are always the same.

The solution generated as described above is provided from the key generation unit 125 to the encryption unit 124. By using the solution as a key, the encryption unit 124 encrypts original data to generate encrypted instruction data. As a result, the encryption unit 124 can execute the encryption processing with a different key each time it encrypts original data.

All other processing in the user terminal 100 may be the same as those in the first embodiment, and this is the case in the first modification.

In the settlement device 200 according to the first modification, as in the case of the first embodiment described above, a control unit 220 that is a functional block is generated therein by executing a computer program. As shown in FIG. 12, functional blocks generated in the control unit 220 in the first modification are substantially the same as those in the first embodiment, and the functions performed by the same functional blocks are the same as in the case of the first embodiment except for the decryption unit 223. The functional blocks generated in the control unit 220 in the first modification include a key generation unit 226 and a key data recording unit 227 that do not exist in the case of the first embodiment, and this is only a different point from the first embodiment.

The key generation unit 226 is adapted to generate a key to be used for decryption, and provide the key to the decryption unit 223. The key data recording unit 227 records data which the key generation unit 226 uses to generate a key.

A method of generating a key in the key generation unit 226 and a timing for providing the key to the decryption unit 223 will be described.

The timing at which the key generation unit 226 provides the key to the decryption unit 223 is a timing at which the decryption unit 223 performs the decryption processing. As described above, encrypted instruction data having a user ID attached thereto is transmitted to the decryption unit 223. At this timing, the decryption unit 223 transmits data for requesting the key generation unit 226 to generate a key. Upon reception of the data, the key generation unit 226 generates a key and transmits data of the generated key to the decryption unit 223. The decryption unit 223 decrypts the encrypted instruction data by using an invariant algorithm and the provided key, thereby obtaining the original data as in the case of the first embodiment.

A method for generating a key by the key generation unit 226 is identical to the method for generating a key by the key generation unit 125 in the user terminal 100. In order to make this possible, the same data recorded in the key data recording unit 126 of the user terminal 100 is recorded in the key data recording unit 227 of the settlement device 200.

The key generation unit 125 of the user terminal 100 is required to generate only a key to be used by the user terminal 100. However, the settlement device 200 must generate the same key as a key generated by the key generation unit 125 of each user terminal 100 in synchronization with the key generated by the key generation unit 125 of each user terminal 100.

Therefore, the same initial values as the above-described initial values which have been initially recorded in the respective key data recording units 126 of the user terminals 100 have been initially recorded in the key data recording unit 227 of the settlement device 200. These initial values are recorded in the key data recording unit 227 while each initial value is linked to a user ID so that the key generation unit 226 can grasp which initial value corresponds to the initial value of which user terminal 100.

When the key generation unit 226 receives, from the decryption unit 223, data for requesting the key generation unit 226 to generate a key, the data includes a user ID attached to encrypted instruction data to be decrypted from now. The key generation unit 226 reads out an initial value attached to the user ID (or the latest solution which has been recorded in the key data recording unit 227 at that time point and is necessary for generating a next solution). By using the read-out initial value or solution, the key generation unit 226 generates a new solution by the same method as that generated by the key generation unit 125 of the user terminal 100. The solution (key) is the same as the solution (key) used by the encryption unit 124 in the user terminal 100 to generate the encrypted instruction data to be decrypted by the decryption unit 223 from now.

Each time the key generation unit 226 generates a solution, the key generation unit 226 increments the read-out initial value or solution by +1 to update the initial value or solution as described above.

The solution generated as described above is provided from the key generation unit 226 to the decryption unit 223. Every time the decryption unit 223 decrypts encrypted instruction data, by using the solution as a key, the decryption unit 223 can use a changing key which is the same as a key used in the encryption unit 124 of the user terminal 100 which has transmitted the encrypted instruction data to the settlement device 200.

All other processing in the settlement device 200 may be the same as those in the first embodiment, and this is the case in the first modification.

<Second Modification>

An Internet banking system in a second modification is basically the same as that in the first embodiment.

Only different points will be described, and the different points are as follows.

In the first embodiment, in the processing of S805 and S901, encrypted instruction data having a user ID attached thereto is provided from the user terminal 100 to the settlement device 200 by the network 400 that is the Internet. In the first modification, the method for providing the encrypted instruction data having the user ID attached thereto to the settlement device 200 is different from the method of the first embodiment.

In the second modification, the functional blocks generated in the user terminal 100 are the same as those in the first embodiment. However, the functions of the main control unit 121 and the data input/output unit 122 are slightly different from those in the first embodiment.

In the first embodiment, encrypted instruction data having a user ID attached thereto is generated in the main control unit 121 in S804. In the first embodiment, the main control unit 121 transmits the data to the data input/output unit 122, and transmits the data to the settlement device 200 via the network 400. However, the main control unit 121 according to the second modification generates encrypted instruction data having a user ID attached thereto, and then performs processing different from the processing in the first embodiment.

In this case, the main control unit 121 generates encryption image data which is data related to an encryption image which is an image capable of specifying the encrypted instruction data having the user ID attached thereto. The encryption image may be any image insofar as it can specify the encrypted instruction data from the encryption image according to a predetermined rule, and for example, the encryption image may be a two-dimensional barcode. The main control unit 121 transmits the encryption image data to the display 101 via the data input/output unit 122 and the interface. For example, an encryption image 101X is displayed on the display 101 as shown in FIG. 15.

In the second modification, the encrypted instruction data having the user ID attached thereto is transferred to the settlement device 200 by using an encryption image 101X.

For example, the settlement device 200 can communicate with a reading device placed in a bank, a store, a restaurant, or the like via the Internet or a dedicated line. The reading device is capable of reading the encryption image 101X displayed on the display 101 of the smartphone, and it is, for example, a camera or a barcode reader. Data read out by the reading device via the image is transmitted to the settlement device 200 via the Internet or a dedicated line. The data to be transmitted to the settlement device 200 may be image data of the encryption image 101X itself, but when the reading device has a function of extracting or reconstructing the encrypted instruction data having the user ID attached thereto from the encryption image 101X, the data may be the encrypted instruction data having the user ID attached thereto.

In any of these cases, the settlement device 200 receives the data at the transmission/reception unit or the interface 214. The data are transmitted to the main control unit 222 via the data input/output unit 221.

If the data to be transmitted to the settlement device 200 is encrypted instruction data having a user ID attached thereto, the subsequent processing is the same as that in the first embodiment.

When the data to be transmitted to the settlement device 200 is image data as described above, the main control unit 222 of the settlement device 200 extracts or reconstructs the encrypted instruction data having the user ID attached thereto from the encryption image 101X specified by the image data. The subsequent processing is the same as that in the first embodiment.

As described above, the encrypted instruction data itself is not necessarily required to be transmitted from the user terminal 100 to the settlement device 200. For example, the encrypted instruction data may be converted into an identifier such as a two-dimensional barcode or a one-dimensional barcode, and then transferred to the settlement device 200 without transmitting the data.

<<Second Embodiment>>

An Internet banking system is also described in a second embodiment.

As in the case of the first embodiment, the Internet banking system in the second embodiment is configured by connecting a large number of user terminals 100 and a settlement device 200 via a network 400. The configuration of the user terminal 100 and the configuration of the settlement device 200 in the second embodiment are substantially the same as the configuration of the user terminal 100 and the configuration of the settlement device 200 in the first embodiment.

For example, regarding the hardware configuration, the user terminal 100 and the settlement device 200 are not different between the first embodiment and the second embodiment.

In short, the difference between the Internet banking system in the first embodiment and the Internet banking system in the second embodiment resides in that the first embodiment can treat both the direct input data and the selection input data, whereas the user terminal 100 and the settlement device 200 in the second embodiment handle only data based on selection input.

Further, the settlement device 200 in the first embodiment is configured to decrypt the encrypted instruction data transmitted from the user terminal 100 by the decryption unit 223 thereof, but the settlement device 200 in the second embodiment does not decrypt the encrypted instruction data transmitted from the user terminal 100.

There exist differences in configuration and operation based on the above-described difference between the Internet banking system in the first embodiment and the Internet banking system in the second embodiment.

Hereinafter, description will be made while focusing on the differences between both the embodiments.

In the second embodiment, as in the case of the first embodiment, functional blocks are generated in the user terminal 100 by executing a computer program. The functional blocks generated in the user terminal 100 in the second embodiment are the same as those in the first embodiment.

However, codes and scheduled operations are basically recorded in the first recording unit 123 in the user terminal 100 according to the first embodiment while the codes and the scheduled operations are respectively linked to each other as described above, but there is a case where codes and scheduled operations are not recorded. However, in the present embodiment, a plurality of pairs of codes and scheduled operations are recorded in each of the first recording units 123 of all user terminals 100 while the codes and the scheduled operations are respectively linked to each other. Further, as described later, original data generated in the user terminal 100 is only data generated by the selection input described above.

In the second embodiment, as in the case of the first embodiment, functional blocks are generated in the settlement device 200 by executing a computer program. As shown in FIG. 13, the functional blocks generated in the settlement device 200 in the second embodiment are basically the same as those in the first embodiment. The difference between the first embodiment and the second embodiment resides in that the decryption unit 223 existing in the first embodiment does not exist and instead of that, an encryption unit 228 that does not exist in the first embodiment exists.

The encryption unit 228 has a function of encrypting original data. The encryption unit 228 is adapted to be provided with original data from the main control unit 222. Usually, a plurality of original data are provided from the main control unit 222, and the encryption unit 228 is adapted to, for example, encrypt all of a plurality of original data which have been provided. In order to make this possible, the main control unit 222 in the second embodiment has a function of generating original data to be provided to the encryption unit 228. As described later, the main control unit 222 is adapted to generate original data by using a user ID and a code recorded in the second recording unit 225. A specific method of generating original data which is executed by the main control unit 222 will be described later.

The encryption unit 228 obtains encrypted instruction data by encrypting original data. The encryption unit 228 is adapted to transmit the encrypted instruction data generated by the encryption unit 228 to the determination unit 224.

Note that in addition to the above-described encrypted instruction data transmitted from the encryption unit 228, the determination unit 224 also receives encrypted instruction data which is transmitted from the main control unit 222 and received from the user terminal 100 by the settlement device 200. The determination unit 224 performs authentication determination by using these two types of encrypted instruction data. Although the first embodiment and the second embodiment are identical to each other in that the determination unit 224 performs the authentication determination, but are different in authentication determination method.

Next, a using method and an operation of the Internet banking system as described above will be described with reference to FIG. 14.

In the Internet banking system of the second embodiment, as in the case of the first embodiment, a user ID is set in each user terminal 100 as preparation for using the system. As in the case of the first embodiment, the main control unit 222 of the settlement device 200 has a list of user IDs for all user terminals 100.

Data of codes and scheduled operations which are linked to each other as shown in FIG. 5 are recorded in the first recording unit 123 of each user terminal 100. Data of codes and scheduled operations recorded in respective user terminals 100 while they are respectively linked to each other as shown in FIG. 8 are recorded in the second recording unit 225 of the settlement device 200 while codes and scheduled operations are linked to the user ID of the user terminal 100 having the first recording unit 123 in which the codes and the scheduled operations are recorded. By this processing, the preparation for use of the Internet banking system is completed.

A user who uses the Internet banking system operates the input device 102 of the user terminal 100 possessed by the user to generate start information (S801). This is the same as that in the first embodiment. In the first embodiment, an image for promoting the user to select either the direct input or the selection input is first displayed on the display 101 as an image for promoting a user's input. However, in the second embodiment, it is possible to perform only the selection input in the first place as described above. Therefore, in the case of the first embodiment, the image to be displayed on the display 101 is an image after the user selects to perform the selection input. In other words, all of the codes and the scheduled operations recorded in the first recording unit 123 are displayed on the display 101.

As in the case of the first embodiment, after the user confirms the content of the displayed scheduled operations, the user selects one of paired code and scheduled operation, or the code. For example, it is assumed that "code 1" is selected. The main control unit 121 attaches the data of a user ID to the data of "code 1" or "1". In this way, the data in which the user ID is attached to the code becomes original data in this case.

As described above, the generation of the original data in the second embodiment is the same as the processing in S802 in the case of the first embodiment except that only the selection input is possible.

The main control unit 121 transmits the generated original data to the encryption unit 124.

When receiving the original data from the main control unit 121, the encryption unit 124 encrypts the original data into encrypted instruction data (S803) . This processing is the same as that in the first embodiment. As described in the first modification, it is possible to change the encryption method. However, in the second embodiment, as in the case of the first embodiment, the encryption to be performed by the encryption unit 124 is different among the user terminals 100, but it is always the same for each user terminal 100.

The encryption unit 124 transmits the generated encrypted instruction data to the main control unit 121.

The main control unit 121 receives the encrypted instruction data from the encryption unit 124. Upon receiving the encrypted instruction data, the main control unit 121 attaches a user ID of a plain text user ID to the received encrypted instruction data (S804). The encrypted instruction data having the user ID attached thereto is transmitted from the main control unit 121 to the data input/output unit 122.

The encrypted instruction data having the user ID attached thereto is transmitted to the settlement device 200 via the interface 114, the transmission/reception unit, and further the network 400 (S805). Furthermore, the settlement device 200 receives the encrypted instruction data having the user ID attached thereto at the transmission/reception unit (S901). This step is the same as that in the first embodiment.

The encrypted instruction data having the user ID attached thereto is transmitted to the data input/output unit 221 of the control unit 220 via the interface 214. The data input/output unit 221 transmits the encrypted instruction data having the user ID attached thereto to the main control unit 222.

When receiving the encrypted instruction data having the user ID attached thereto, the main control unit 222 determines whether one of the user IDs contained in the list of the user IDs of all the user terminals 100 which the user possesses is coincident with the user ID attached to the encrypted instruction data. This can also be considered as a part of the authentication determination described later. However, when the user ID attached to the encrypted instruction data is not coincident with any one of the user IDs contained in the list, the main control unit 22 stops the subsequent processing because the user terminal 100 which has transmitted the encrypted instruction data having the user ID attached thereto is not authentic.

On the other hand, when the user ID attached to the encrypted instruction data is coincident with any one of the user IDs contained in the list, the main control unit 222 transmits the encrypted instruction data having the user ID attached thereto to the determination unit 224 as it is. In the first embodiment, a destination of encrypted instruction data transmitted from such a user terminal 100 of the main control unit 222 is the decryption unit 223. The destination of the encrypted instruction data transmitted from the user terminal 100 is different between the first embodiment and the second embodiment.

Furthermore, the main control unit 222 generates original data and transmits the original data to the encryption unit 228. The method for generating original data in the main control unit 222 is as follows.

The main control unit 222 generates original data by the same method as the main control unit 121 of a user terminal 100 that has transmitted encrypted instruction data together with a user ID. In the main control unit 121 of the user terminal 100, one original data is generated when a single instruction is given to the settlement device 200. However, the main control unit 222 generally generates a plurality of original data when receiving encrypted instruction data for one instruction from the user terminal 100.

The main control unit 222 generates original data by using the same one (only a code or both of a code and a scheduled operation) which is linked to the same user ID as a user ID transmitted together with encrypted instruction data from a user terminal 100 and also was used in the main control unit 121 of the user terminal 100 to generate the original data among codes and scheduled operations linked thereto recorded in the second recording unit 225. For example, in the example shown in FIG. 8, when the user ID received from the user terminal 100 together with the encrypted instruction data by the main control unit 222 is 4, the main control unit 222 generates or may generate, as original data, data in which "4" as the user ID is attached to each of "code 1 (or "1")", "code 2 (or "2")", "code 3 (or "3")" and "code 4 (or "4")". The meaning of the phrase "generates or may generate" will be described later.

In short, by using data recorded in the second recording unit 225, the main control unit 222 generates or may generate all of original data that the main control unit 121 of the user terminal 100 which has transmitted encrypted instruction data can generate by using data recorded in the first recording unit 123.

In the present embodiment, it is assumed that for the time being, the main control unit 222 first generates all of the original data that the main control unit 121 of the user terminal 100 which has transmitted the encrypted instruction data can generate by using the data recorded in the first recording unit 123, and transmits all the original data to the encryption unit 228. When the user ID is 4, as described above, four original data are generated in the main control unit 222, and transmitted together with the user ID to the encryption unit 228.

When receiving original data together with a user ID from the main control unit 222, the encryption unit 228 encrypts the original data (S907).

Encrypted instruction data from a large number of user terminals 100 are transmitted to the encryption unit 228. The encryption unit 228 encrypts the original data transmitted from the main control unit 222 by the same method as the encryption method performed by the encryption unit 124 in the user terminal 100 which has transmitted the encrypted instruction data. With respect to the encrypted instruction data transmitted from a large number of user terminals 100, the same algorithm was used for encryption of these data, but different keys were used for the encryption. Therefore, when the encryption unit 228 encrypts original data transmitted from the main control unit 222, it is necessary to identify a key which was used to perform encryption in each user terminal 100. Such key identification can be performed based on the user ID transmitted from the main control unit 222 in the same manner as in the case where a key used for decryption is identified in the decryption unit 223 of the first embodiment. In addition to the algorithm required for encryption, the encryption unit 228 records user IDs recorded in the first recording units 123 of all user terminals 100 and keys used in the encryption units 124 of the user terminals 100 to which the user IDs are assigned while the user IDs and the keys are respectively linked to each other. The encryption unit 228 specifies, as a key for encrypting original data, a key linked to a user ID which is the same as the user IDs transmitted from the main control unit 222 together with the original data and has been recorded in the encryption unit 228.

Then, the encryption unit 228 encrypts the original data received from the main control unit 222 by using the above-described algorithm and the key specified with the user ID as described above. As a result, encrypted instruction data are obtained. The encryption unit 228 may receive a plurality of original data from the main control unit 222. When receiving a plurality of original data, the encryption unit 228 in the present embodiment encrypts all the plurality of original data. In the case of the above example, the encryption unit 228 that has received the four original data encrypts each of the four original data to generate four encrypted instruction data.

The generated plurality of encrypted instruction data are transmitted from the encryption unit 228 to the determination unit 224 while the plurality of encrypted instruction data are linked to original data serving as sources for generating the encrypted instruction data, respectively.

The determination unit 224 performs authentication determination by using the above-described encrypted instruction data transmitted from the encryption unit 228 and the encrypted instruction data which is transmitted from the main control unit 222 and received from the user terminal 100 by the settlement device 200 (S903).

The determination unit 224 in the second embodiment determines whether one of a plurality of encrypted instruction data received in a lump from the encryption unit 228 and the encrypted instruction data transmitted from the main control unit 222 are coincident with each other. When one of the former and the latter are coincident with each other, the determination unit 224 makes a positive determination indicating that the encrypted instruction data transmitted from the user terminal 100 to the settlement device 200 is authentic.

As described above, since the encrypted instruction data generated by the encryption unit 228 are generated based on a plurality of original data generated in the main control unit 121 which are respectively equal to all of original data which can be generated in the main control unit 121 of the user terminal 100, one of the encrypted instruction data generated in the encryption unit 228 ought to be coincident with the encrypted instruction data transmitted from the user terminal 100 insofar as there is not any injustice such as falsification. Based on such principle, when one of the plural encrypted instruction data received in a lump from the encryption unit 228 coincides with the encrypted instruction data transmitted from the main control unit 222, the determination unit 224 makes a positive determination.

On the other hand, when all of the plurality of encrypted instruction data received in a lump from the encryption unit 228 do not coincide with the encrypted instruction data transmitted from the main control unit 222, the determination unit 224 makes a negative determination indicating that the encrypted instruction data transmitted from the user terminal 100 to the settlement device 200 is not authentic.

As a result of the above determination, the determination unit 224 generates positive determination data or negative determination data.

Even when the determination data is positive or negative, the determination unit 224 transmits the determination data to the main control unit 222 while attaching the user ID transmitted from the main control unit 222 to the determination data. Furthermore, when the determination data is positive, the determination unit 224 transmits the determination data to the main control unit 222 while attaching, to the determination data, data related to a code contained in original data transmitted from the encryption unit 228 while the original data is linked to the encrypted instruction data which is coincident with the encrypted instruction data transmitted from the main control unit 222 and is transmitted from the encryption unit 228.

The determination data is transmitted to the main control unit 222 as described above.

It is assumed that the determination data is positive. In addition to a user ID, a code is attached to the positive determination data. Based on the user ID and the code, the main control unit 222 causes the execution unit (not shown) to execute an operation specified by the instruction data or the like (S904). This processing is the same as the processing executed in the first embodiment when a user ID and a code are attached to positive determination data.

On the other hand, when the determination data is negative, the main control unit 222 does not perform the operation as described above.

Further, the main control unit 222 generates result data regardless of whether the determination data is positive or negative (S905). The generated result data is transmitted to the user terminal 100 via the network 400 (S906). The user terminal 100 receives the result data (S806). These processing and subsequent processing to be performed in the user terminal 100 are the same as those in the first embodiment.

Note that in the above description of the second embodiment, the determination unit 224 compares a plurality of encrypted instruction data transmitted in a lump from the encryption unit 228 with one encrypted instruction data transmitted from the main control unit 222, and makes a determination based on whether one of the former data and the latter data are coincident with each other. This is a method based on the premise that all encrypted instruction data which have been generated in the settlement device 200 and are generable in the user terminal 100 are compared with encrypted instruction data transmitted from the user terminal 100 in a so-called round-robin style. In other words, it can be said that this method is a batch processing method of performing authentication determination in the determination unit 224 after all of a plurality of encrypted instruction data to be generated in the settlement device 200 have been all present.

Of course, when the round robin is performed, one of the plurality of encrypted instruction data transmitted in a lump from the encryption unit 228 ought to be coincident with the encrypted instruction data transmitted from the main control unit 222 unless the encrypted instruction data transmitted from the user terminal 100 has been subjected to injustice such as falsification.

However, needless to perform the round robin, for example, when first encrypted instruction data generated by the encryption unit 228 has been transmitted to the determination unit 224 and the transmitted first encrypted instruction data just coincides with the encrypted instruction data transmitted from the main control unit 222 in the determination unit 224, it is unprofitable to compare the encrypted instruction data transmitted from the main control unit 222 with encrypted instruction data which will be subsequently transmitted from the encryption unit 228 and cannot coincide with the encrypted instruction data transmitted from the main control unit 222. Accordingly, the authentication determination processing to be performed in the determination unit 224 may be performed by comparing encrypted instruction data transmitted from the encryption unit 228 and encrypted instruction data transmitted from the main control unit 222 in one-to-one correspondence, in a so-called real-time processing style.

In that case, every time the encryption unit 228 encrypts one of original data received from the main control unit 222 into encrypted instruction data, the determination unit 224 may transmit the encrypted instruction data to the determination unit 224. Every time the determination unit 224 receives one encrypted instruction data from the encryption unit 228, the determination unit 224 may compare the one encrypted instruction data with the encrypted instruction data which has been received from the main control unit 222, and generate determination data each time based on whether both the encrypted instruction data are coincident with each other. Of course, determination data to be generated when both the encrypted instruction data are coincident with each other is positive determination data, whereas determination data to be generated when both the encrypted instruction data are not coincident with each other is negative determination data.

As described above, when the determination unit 224 executes the authentication determination as real-time processing, every time the encryption unit 228 generates one encrypted instruction data, the encryption unit 228 transmits the encrypted instruction data to the determination unit 224. If the encryption unit 228 performs such processing, it is not necessary for the encryption unit 228 to receive all of a plurality of original data which can be generated by the main control unit 222, and then start encryption of the original data. In other words, the encryption unit 228 which has been already described is adapted to receive all of a plurality of original data from the main control unit 222 and then perform the processing of encrypting the original data in a batch processing style. However, the encryption unit 228 may perform encryption on original data every time it receives one original data from the main control unit 222. In the foregoing description, the main control unit 222 generates all original data that can be generated by the user terminal 100 and then transmits the original data to the encryption unit 228. However, if the encryption unit 228 performs the processing of encrypting original data in a real-time processing style, every time the main control unit 222 generates one original data, the main control unit 222 may transmit the one original data to the encryption unit 228.

At the time point when encrypted instruction data transmitted from the main control unit 222 coincides with encrypted instruction data transmitted one by one from the encryption unit 228, the determination unit 224 generates positive determination data and transmits the positive determination data to the main control unit 222. The main control unit 222 may stop generation of original data at the time point when it has received the positive determination data. The main control unit 222 that has received the positive determination data may cause the encryption unit 228 to stop the processing of encrypting subsequent original data, and cause the determination unit 224 to stop subsequent authentication determination.

Note that encrypted instruction data generated in the user terminal 100 in the second embodiment are not decrypted by the settlement device 200.

Therefore, the encryption method performed in the encryption unit 123 of the user terminal 100 and the encryption method which is the same as the above encryption method and is performed in the encryption unit 228 of the settlement device 200 may be an encryption method which disenables decryption.

For example, the encryption method performed in the encryption unit 123 and the encryption unit 228 may be processing of obtaining a hash value for original data, which is irreversible conversion. Furthermore, the encryption method performed in the encryption unit 123 and the encryption unit 228 may be, for example, a method of extracting a first half part, extracting a last half part, extracting even-numbered characters or characters of a multiple of 3, extracting only numerals from a character string having a mixture of alphabetical characters and numerals or the like from data obtained by encrypting original data so that the original data can be decrypted. When the amount of data is reduced as described above, it is necessary to pay attention so that an erroneous determination caused by the loss of the amount of data does not occur in the authentication determination in the determination unit 224. For example, it should be ensured that no erroneous determination occurs probabilistically by sufficiently lengthening a data string obtained by extracting the first half part.

## Claims

1. An execution device that is used in combination with an instruction device as a device capable of transmitting an instruction serving as a trigger for performing an operation, and performs an operation when receiving an instruction from the instruction device, wherein the instruction device comprises instruction device encryption means for encrypting original data containing instruction data related to an instruction for specifying one operation from among operations that can be performed by the execution device, thereby generating encrypted instruction data, and is configured to transfer the encrypted instruction data encrypted by the instruction device encryption means to the execution device, thereby performing the instruction, and
wherein the execution device comprises:

reception means for receiving the encrypted instruction data;
execution device decryption means for decrypting the encrypted instruction data to return the encrypted instruction data to the original data; and
execution means for performing, as the operation, an operation specified by the instruction data contained in the original data decrypted by the execution device decryption means when the encrypted instruction data has been returned to the original data by the execution device decryption means.

**2.** An execution device that is used in combination with an instruction device as a device capable of transmitting an instruction serving as a trigger for performing an operation, and performs an operation selected from scheduled operations which are a plurality of predetermined operations when receiving an instruction from the instruction device,
wherein the instruction device comprises instruction device encryption means for encrypting original data containing instruction data related to an instruction for specifying one operation from among the scheduled operations that can be executed by the execution device, thereby generating encrypted instruction data, and is configured to transfer the encrypted instruction data encrypted by the instruction device encryption means to the execution device, thereby performing the instruction, and
wherein the execution device comprises:

reception means for receiving the encrypted instruction data;
execution device encryption means for encrypting original data containing instruction data related to an instruction for specifying one operation from among the scheduled operations by a method which is identical to a method when the instruction device encryption means performs encryption for all instruction patterns, whereby a plurality of encrypted instruction data can be generated; and
execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

**3.** The execution device according to claim 1 or 2, wherein the reception means is adapted to receive the encrypted instruction data from the instruction device via a network.

**4.** The execution device according to claim 1, wherein the instruction device comprises:

instruction device solution generation means capable of sequentially generating, based on an initial solution, a solution that is an enumeration of a predetermined number of pieces of at least one type of letters, numerals and symbols and is always generated as an identical one under a same condition; and
instruction device key generation means for generating a key based on the solution generated by the instruction device solution generation means every time the encrypted instruction data is transferred to the execution device, and the instruction device encryption means is adapted to perform encryption with a different key every time the instruction device encryption means encrypts the original data by using a key generated by the instruction device key generation means, and
wherein the execution device comprises execution device solution generation means capable of generating, based on the initial solution identical to the initial solution in the instruction device, the solution that is identical to the solution generated by the instruction device solution generation means and synchronized with the solution generated in the instruction device solution generation means of the instruction device; and
execution device key generation means for generating a key identical to the key generated in the instruction device key generation means based on the solution generated by the execution device solution generation means every time the encrypted instruction data is received from the instruction device by the reception means, and when decrypting the original data with a key generated in the execution device key generation means, the execution device decryption means is adapted to perform decryption with a different key.

**5.** The execution device according to claim 2, wherein the instruction device comprises:

instruction device solution generation means capable of sequentially generating, based on an initial solution, a solution that is an enumeration of a predetermined number of pieces of at least one type of letters, numerals and symbols and is always generated as an identical one under a same condition; and
instruction device key generation means for generating a key based on the solution generated by the instruction device solution generation means every time the encrypted instruction data is transferred to the execution device, and the instruction device encryption means is adapted to perform encryption with a different key every time the instruction device encryption means encrypts the original data by using a key generated by the instruction device key generation means, and
wherein the execution device comprises execution device solution generation means capable of generating, based on an initial solution identical to the initial solution in the instruction device, a solution that is identical to the solution generated by the instruction device solution generation means and synchronized with the solution generated in the instruction device solution generation means of the instruction device; and
execution device key generation means for generating a key identical to the key generated in the instruction device key generation means based on the solution generated by the execution device solution generation means every time the encrypted instruction data is received from the instruction device by the reception means, and when decrypting the original data with a key generated in the execution device key generation means, the execution device decryption means is adapted to perform decryption with a different key.

**6.** The execution device according to claim 4 or 5, wherein the instruction device comprises a plurality of instruction devices, and the initial solutions in the instruction devices are different from one another;
the execution device solution generation means is adapted to generate, based on the initial solution identical to the initial solution in each of the instruction devices, the solution that is identical to the solution generated by the instruction device solution generation means possessed by each of the instruction devices and is synchronized with the solution generated in the instruction device solution generation means of each of the instruction devices; and
every time the encrypted instruction data is received from each of the instruction devices by the reception means, the execution device key generation means is adapted to generate a key identical to a key generated in the instruction device key generation means of the instruction device transmitting the encrypted instruction data based on the solution generated in the execution device solution generating means.

**7.** The execution device according to claim 4 or 5, wherein the execution device key generation means uses, as the key, the solution generated by the execution device solution generation means as it is.

**8.** The execution device according to claim 2, wherein the instruction data is a code linked to each of the scheduled operations.

**9.** The execution device according to claim 1 or 2, wherein the instruction device is a terminal device used by a user, the instruction data is an instruction for remittance from an account of the user to another account, and the execution device is an Internet banking server capable of instructing remittance from the account of the user to another account.

**10.** A method to be executed by an execution device that is used in combination with an instruction device as a device capable of transmitting an instruction serving as a trigger to perform an operation, and performs an operation when receiving an instruction from the instruction device,
wherein the instruction device comprises instruction device encryption means for encrypting original data containing instruction data related to an instruction for specifying one operation from among operations that can be performed by the execution device, thereby generating encrypted instruction data, and is configured to transfer the encrypted instruction data encrypted by the instruction device encryption means to the execution device, thereby performing the instruction, and
wherein the method comprises:

a reception step of receiving the encrypted instruction data;
an execution device decryption step of decrypting the encrypted instruction data to return the encrypted instruction data to the original data; and
an execution step performing, as the operation, an operation specified by the instruction data contained in the original data decrypted by the execution device decryption step when the encrypted instruction data has been returned to the original data by the execution device decryption step,

wherein the steps being executed by the execution device.

**11.** A method to be executed by an execution device that is used in combination with an instruction device as a device capable of transmitting an instruction serving as a trigger for performing an operation, and performs an operation selected from scheduled operations which are a plurality of predetermined operations when receiving an instruction from the instruction device,

wherein the instruction device comprises instruction device encryption means for encrypting original data containing instruction data related to an instruction for specifying one operation from among the scheduled operations that can be executed by the execution device, thereby generating encrypted instruction data, and is configured to transfer the encrypted instruction data encrypted by the instruction device encryption means to the execution device, thereby performing the instruction, and
wherein the method comprises:

a reception step of receiving the encrypted instruction data;
an execution device encryption step of encrypting original data containing instruction data related to an instruction for specifying one operation from among the scheduled operations by a method identical to a method when the instruction device encryption means performs encryption for all instruction patterns, whereby a plurality of encrypted instruction data can be generated; and
an execution step of performing, as the operation, an operation specified by the instruction data contained in the original data serving as a source of the encryption instruction data when one of the plurality of encrypted instruction data generated by the execution device encryption step is coincident with the encrypted instruction data received in the reception step,

wherein the steps being executed by the execution device.

**12.** A computer program for causing a predetermined computer to function as an execution device that is used in combination with an instruction device as a device capable of transmitting an instruction serving as a trigger to perform an operation, and performs an operation when receiving an instruction from the instruction device,
wherein the instruction device comprises instruction device encryption means for encrypting original data containing instruction data related to an instruction for specifying one operation from among operations that can be performed by the execution device, thereby generating encrypted instruction data, and is configured to transfer the encrypted instruction data encrypted by the instruction device encryption means to the execution device, thereby performing the instruction, and
wherein the computer program causes the computer to execute:

a reception step of receiving the encrypted instruction data;
an execution device decryption step of decrypting the encrypted instruction data to return the encrypted instruction data to the original data; and
an execution step performing, as the operation, an operation specified by the instruction data contained in the original data decrypted by the execution device decryption step when the encrypted instruction data has been returned to the original data by the execution device decryption step.

**13.** A computer program for causing a predetermined computer to function as an execution device that is used in combination with an instruction device as a device capable of transmitting an instruction serving as a trigger for performing an operation, and performs an operation selected from scheduled operations which are a plurality of predetermined operations when receiving an instruction from the instruction device,
wherein the instruction device comprises instruction device encryption means for encrypting original data containing instruction data related to an instruction for specifying one operation from among the scheduled operations that can be executed by the execution device, thereby generating encrypted instruction data, and is configured to transfer the encrypted instruction data encrypted by the instruction device encryption means to the execution device, thereby performing the instruction, and
wherein the computer program causes the computer to execute:

a reception step of receiving the encrypted instruction data;
an execution device encryption step of encrypting original data containing instruction data related to an instruction for specifying one operation from among the scheduled operations by a method which is identical to a method when the instruction device encryption means performs encryption for all instruction patterns, whereby a plurality of encrypted instruction data can be generated; and
an execution step of performing, as the operation, an operation specified by the instruction data contained in the original data serving as a source of the encryption instruction data when one of the plurality of encrypted instruction data generated by the execution device encryption step is coincident with the encrypted instruction data received in the reception step.

**14.** An instruction device that is a device capable of transmitting an instruction serving as a trigger for performing an operation and used in combination with an execution device which performs an operation when receiving an instruction from the instruction device,
wherein the instruction device comprises:

instruction device encryption means for encrypting original data containing instruction data related to an instruction for specifying one operation from among operations that can be performed by the execution device, thereby generating encrypted instruction data; and
transfer means for transferring the encrypted instruction data encrypted by the instruction device encryption means to the execution device, thereby performing the instruction, and

wherein the execution device comprises:

reception means for receiving the encrypted instruction data;
execution device decryption means for decrypting the encrypted instruction data to return the encrypted instruction data to the original data; and
execution means for performing, as the operation, an operation specified by the instruction data contained in the original data decrypted by the execution device decryption means when the encrypted instruction data has been returned to the original data by the execution device decryption means.

**15.** An instruction device that is a device capable of transmitting an instruction serving as a trigger for performing an operation and used in combination with an execution device which performs an operation selected from scheduled operations which are a plurality of predetermined operations when receiving an instruction from the instruction device,
wherein the instruction device comprises:

instruction device encryption means for encrypting original data containing instruction data related to an instruction for specifying one operation from among the scheduled operations that can be executed by the execution device, thereby generating encrypted instruction data, and
transfer means for transferring the encrypted instruction data encrypted by the instruction device encryption means to the execution device, thereby performing the instruction, and

wherein the execution device comprises:

reception means for receiving the encrypted instruction data;
execution device encryption means for encrypting original data containing instruction data related to an instruction for specifying one operation from among the scheduled operations by a method which is identical to a method when the instruction device encryption means performs encryption for all instruction patterns, whereby a plurality of encrypted instruction data can be generated; and
execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

**16.** A method to be executed by an instruction device that is a device capable of transmitting an instruction serving as a trigger for performing an operation and used in combination with an execution device which performs an operation when receiving an instruction from the instruction device,
wherein the method comprises:

an instruction device encryption step of encrypting original data containing instruction data related to an instruction for specifying one operation from among operations that can be performed by the execution device, thereby generating encrypted instruction data; and
a transfer step of transferring the encrypted instruction data encrypted in the instruction device encryption step to the execution device, thereby performing the instruction, the steps being performed by the instruction device,

wherein the steps being executed by the instruction device, and
wherein the execution device comprises:

reception means for receiving the encrypted instruction data;
execution device decryption means for decrypting the encrypted instruction data to return the encrypted instruction data to the original data; and
execution means for performing, as the operation, an operation specified by the instruction data contained in the original data decrypted by the execution device decryption means when the encrypted instruction data has been returned to the original data by the execution device decryption means.

**17.** A method to be executed by an instruction device that is a device capable of transmitting an instruction serving as a trigger for performing an operation and used in combination with an execution device which performs an operation selected from scheduled operations which are a plurality of predetermined operations when receiving an instruction from the instruction device,
wherein the method comprises:

an instruction device encryption step of encrypting original data containing instruction data related to an instruction for specifying one operation from among the scheduled operations that can be executed by the execution device, thereby generating encrypted instruction data, and
a transfer step of transferring the encrypted instruction data encrypted in the instruction device encryption step to the execution device, thereby performing the instruction,

wherein the steps being executed by the instruction device, and
wherein the execution device comprises:

reception means for receiving the encrypted instruction data;
execution device encryption means for encrypting original data containing instruction data related to an instruction for specifying one operation from among the scheduled operations by a method which is identical to a method when encryption is performed in the instruction device encryption step for all instruction patterns, whereby a plurality of encrypted instruction data can be generated; and
execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

**18.** A computer program for causing a predetermined computer to function as an instruction device that is a device capable of transmitting an instruction serving as a trigger for performing an operation and used in combination with an execution device which performs an operation when receiving an instruction from the instruction device,
wherein the computer program causes the computer to execute:

an instruction device encryption step of encrypting original data containing instruction data related to an instruction for specifying one operation from among operations that can be performed by the execution device, thereby generating encrypted instruction data; and
a transfer step of transferring the encrypted instruction data encrypted in the instruction device encryption step to the execution device, thereby performing the instruction,

wherein the execution device comprises:

reception means for receiving the encrypted instruction data;
execution device decryption means for decrypting the encrypted instruction data to return the encrypted instruction data to the original data; and
execution means for performing, as the operation, an operation specified by the instruction data contained in the original data decrypted by the execution device decryption means when the encrypted instruction data has been returned to the original data by the execution device decryption means.

**19.** A computer program for causing a predetermined computer to function as an instruction device that is a device capable of transmitting an instruction serving as a trigger for performing an operation and used in combination with an execution device which performs an operation selected from scheduled operations which are a plurality of predetermined operations when receiving an instruction from the instruction device,
wherein the computer program causes the computer to execute:

an instruction device encryption step of encrypting original data containing instruction data related to an instruction for specifying one operation from among the scheduled operations that can be executed by the execution device, thereby generating encrypted instruction data, and
a transfer step of transferring the encrypted instruction data encrypted in the instruction device encryption step to the execution device, thereby performing the instruction, and

wherein the execution device comprises:

reception means for receiving the encrypted instruction data;
execution device encryption means for encrypting original data containing instruction data related to an instruction for specifying one operation from among the scheduled operations by a method which is identical to a method when encryption is performed in the instruction device encryption step for all instruction patterns, whereby a plurality of encrypted instruction data can be generated; and
execution means for performing, as the operation, an operation specified by the instruction data contained in the original data serving as a source of the encryption instruction data when one of the plurality of encrypted instruction data generated by the execution device encryption means is coincident with the encrypted instruction data received by the reception means.

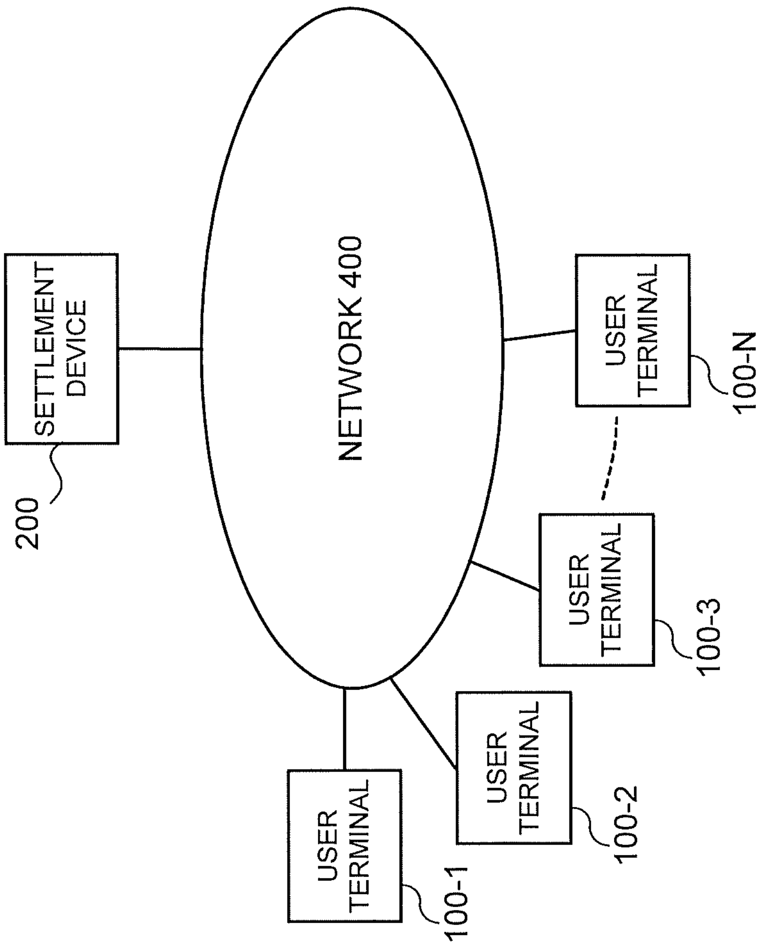
SETTLEMENT DEVICE
200
NETWORK 400
USER TERMINAL
100-1
USER TERMINAL
100-2
USER TERMINAL
100-3
USER TERMINAL
100-N

FIG. 1

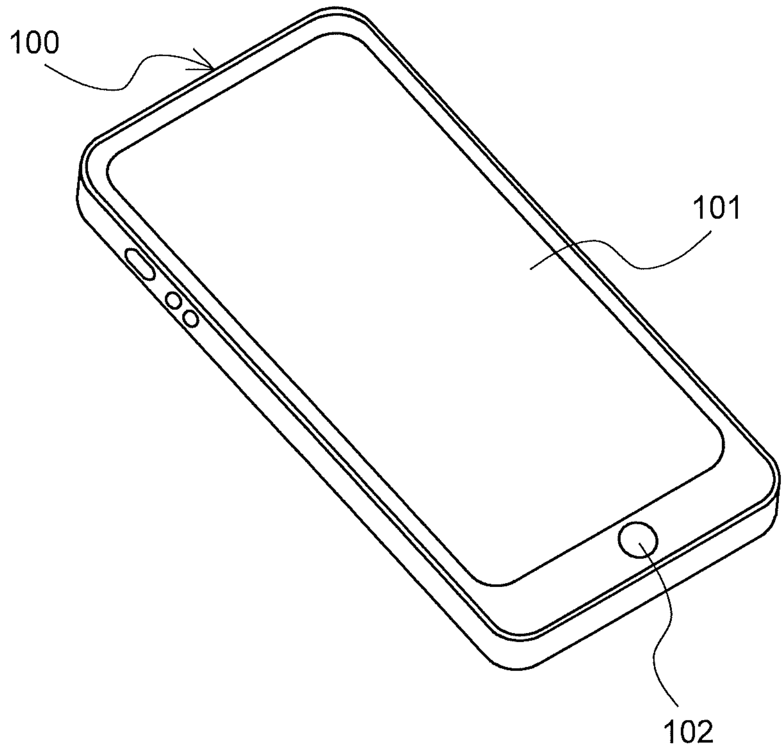


FIG. 2

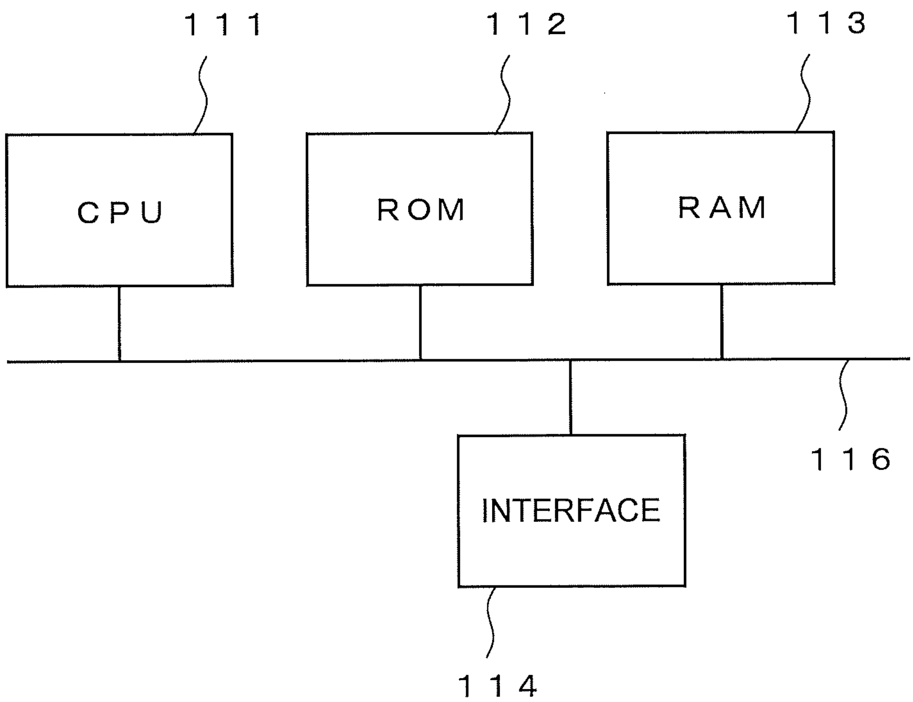


FIG. 3

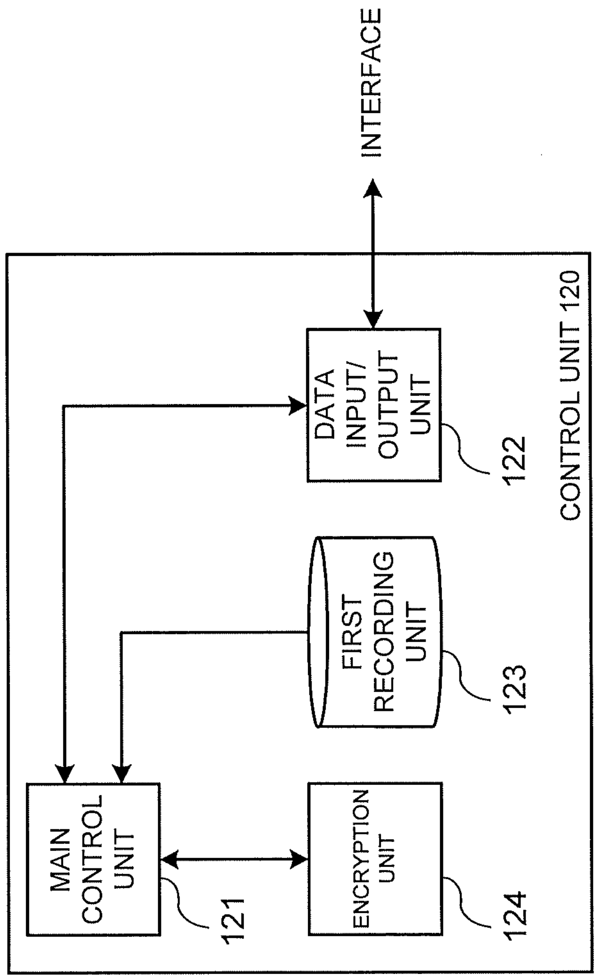


FIG. 4

| CODE | SCHEDULED OPERATION |
|---|---|
| 1 | REMIT ONE MILLION YEN TO ACCOUNT A |
| 2 | REMIT 100,000 YEN TO ACCOUNT A |
| 3 | REMIT ONE MILLION YEN TO ACCOUNT B |
| 4 | REMIT 100,000 YEN TO ACCOUNT B |

FIG. 5

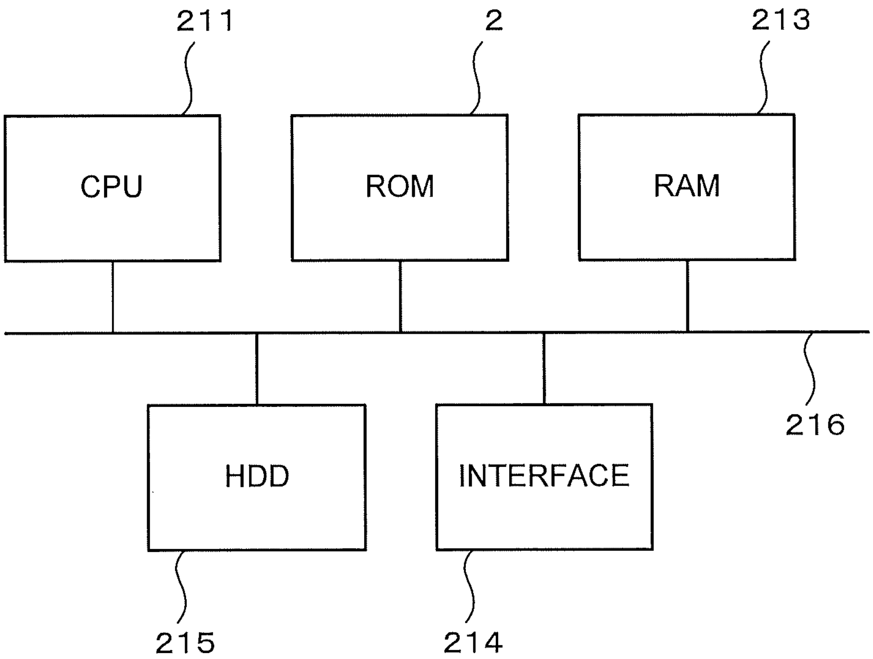
211
2
213
CPU
ROM
RAM
216
HDD
INTERFACE
215
214

FIG. 6

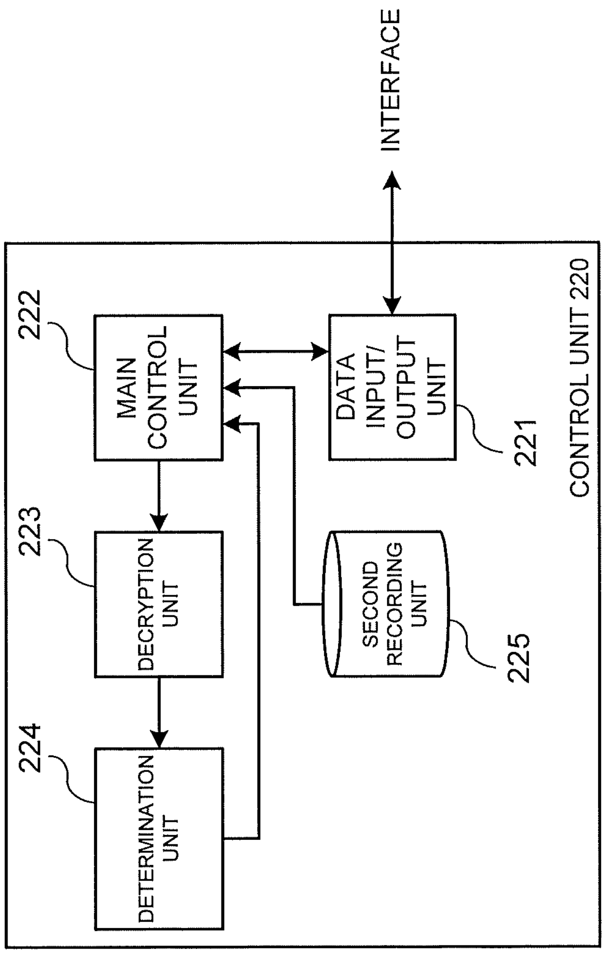
INTERFACE
CONTROL UNIT 220
222
MAIN CONTROL UNIT
DATA INPUT/ OUTPUT UNIT
221
223
DECRYPTION UNIT
SECOND RECORDING UNIT
225
224
DETERMINATION UNIT

FIG. 7

USER ID: 1

| CODE | SCHEDULED OPERATION |
|---|---|
| 1 | REMIT ONE MILLION YEN TO ACCOUNT A |
| 2 | REMIT 100,000 YEN TO ACCOUNT A |
| 3 | REMIT ONE MILLION YEN TO ACCOUNT B |
| 4 | REMIT 100,000 YEN TO ACCOUNT B |

USER ID: 2

| CODE | SCHEDULED OPERATION |
|---|---|
| 1 | REMIT ONE MILLION YEN TO ACCOUNT C |
| 2 | REMIT 100,000 YEN TO ACCOUNT C |
| 3 | REMIT ONE MILLION YEN TO ACCOUNT D |

USER ID: 3

| CODE | SCHEDULED OPERATION |
|---|---|
| - | - |

USER ID: 4

| CODE | SCHEDULED OPERATION |
|---|---|
| 1 | REMIT 100,000 YEN TO ACCOUNT E |
| 2 | REMIT 100,000 YEN TO ACCOUNT F |
| 3 | VIEW BALANCE OF ACCOUNT |
| 4 | VIEW DEPOSIT/WITHDRAWAL RECORD OF PAST ONE MONTH |

FIG. 8

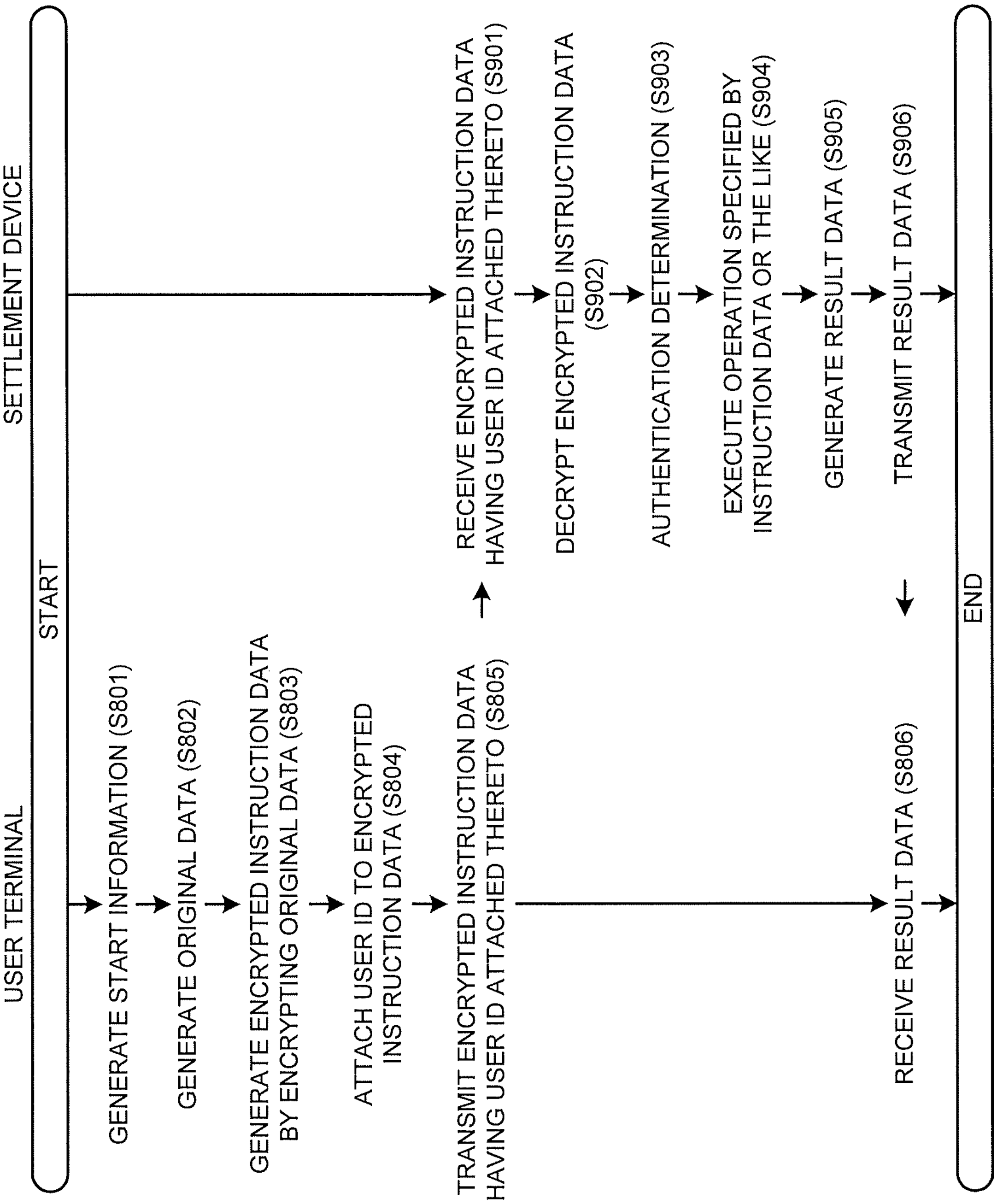
USER TERMINAL
SETTLEMENT DEVICE
START
GENERATE START INFORMATION (S801)
GENERATE ORIGINAL DATA (S802)
GENERATE ENCRYPTED INSTRUCTION DATA BY ENCRYPTING ORIGINAL DATA (S803)
ATTACH USER ID TO ENCRYPTED INSTRUCTION DATA (S804)
TRANSMIT ENCRYPTED INSTRUCTION DATA HAVING USER ID ATTACHED THERETO (S805)
RECEIVE ENCRYPTED INSTRUCTION DATA HAVING USER ID ATTACHED THERETO (S901)
DECRYPT ENCRYPTED INSTRUCTION DATA (S902)
AUTHENTICATION DETERMINATION (S903)
EXECUTE OPERATION SPECIFIED BY INSTRUCTION DATA OR THE LIKE (S904)
GENERATE RESULT DATA (S905)
TRANSMIT RESULT DATA (S906)
RECEIVE RESULT DATA (S806)
END

FIG. 9

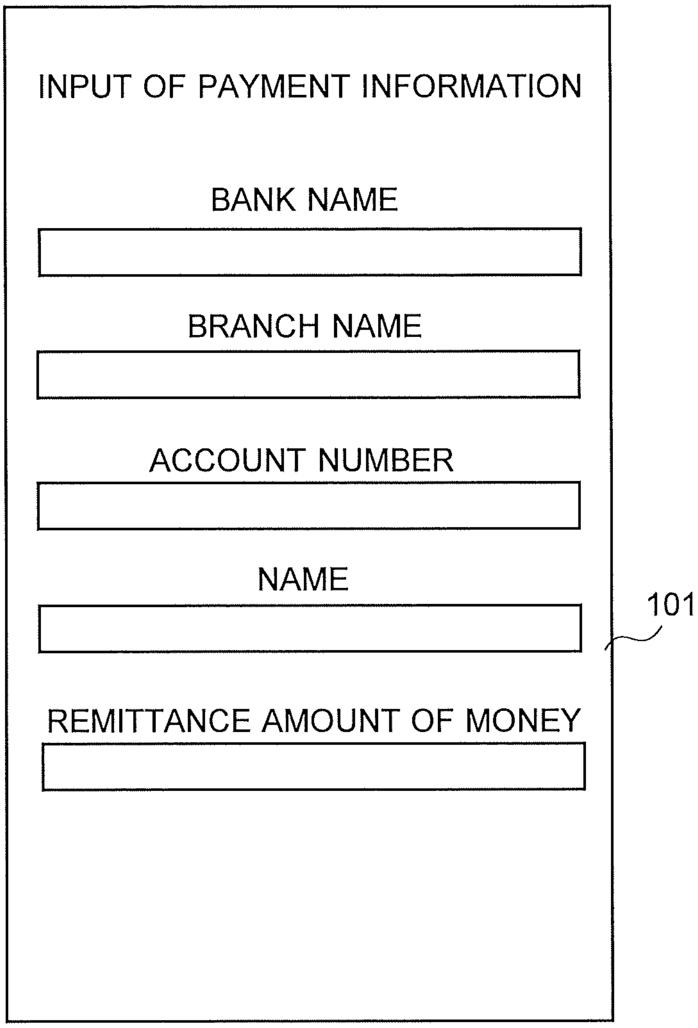
INPUT OF PAYMENT INFORMATION
BANK NAME
BRANCH NAME
ACCOUNT NUMBER
NAME
REMITTANCE AMOUNT OF MONEY
101

FIG. 10

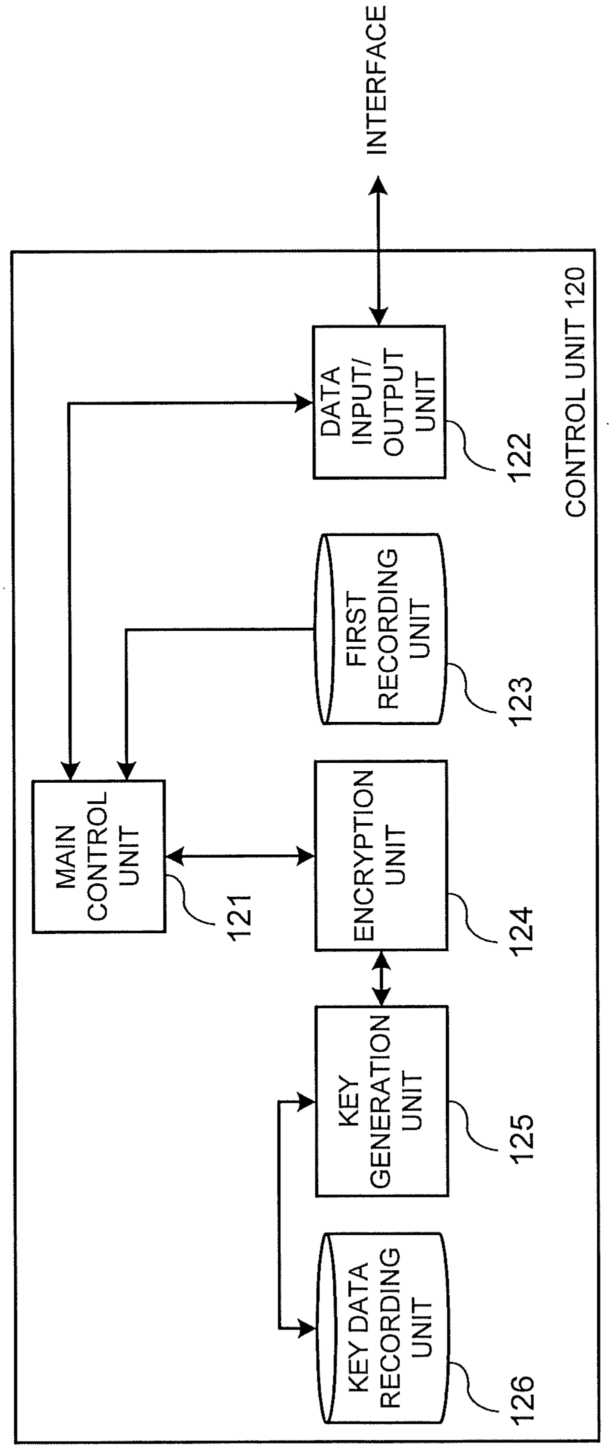
INTERFACE
CONTROL UNIT 120
MAIN CONTROL UNIT
121
DATA INPUT/ OUTPUT UNIT
122
FIRST RECORDING UNIT
123
ENCRYPTION UNIT
124
KEY GENERATION UNIT
125
KEY DATA RECORDING UNIT
126

FIG. 11

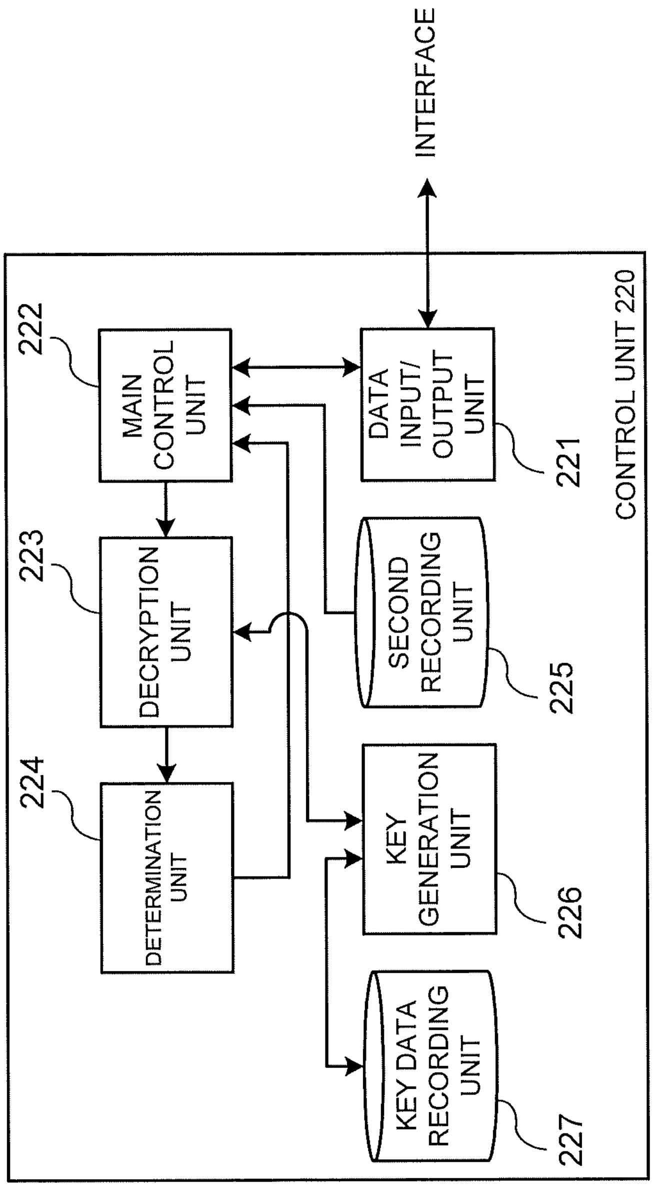
INTERFACE
CONTROL UNIT 220
MAIN CONTROL UNIT
222
DATA INPUT/ OUTPUT UNIT
221
DECRYPTION UNIT
223
SECOND RECORDING UNIT
225
DETERMINATION UNIT
224
KEY GENERATION UNIT
226
KEY DATA RECORDING UNIT
227

FIG. 12

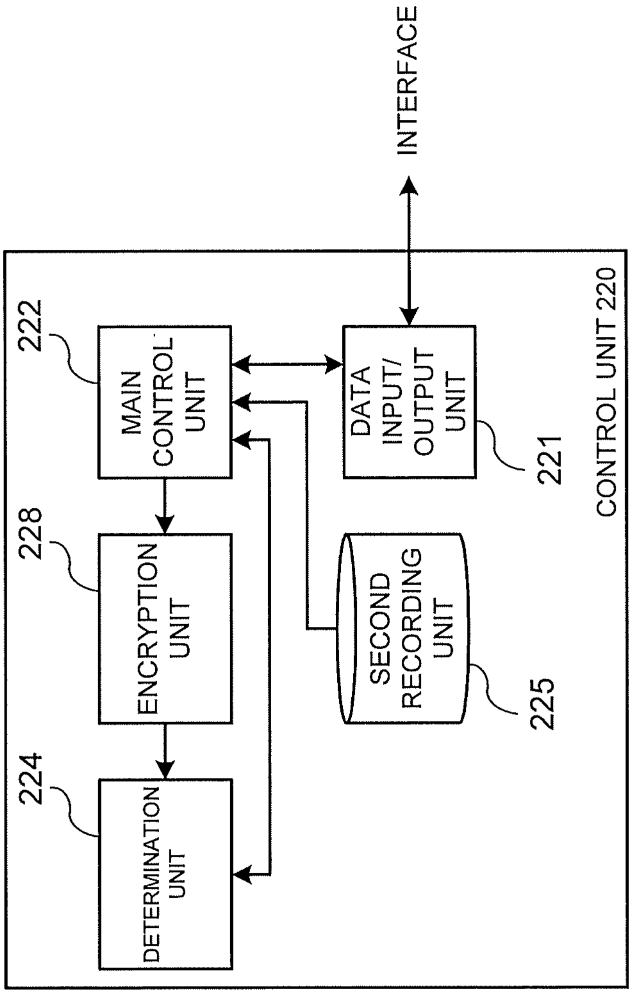
INTERFACE
222
MAIN CONTROL UNIT
DATA INPUT/ OUTPUT UNIT
221
228
ENCRYPTION UNIT
SECOND RECORDING UNIT
225
224
DETERMINATION UNIT
CONTROL UNIT 220

FIG. 13

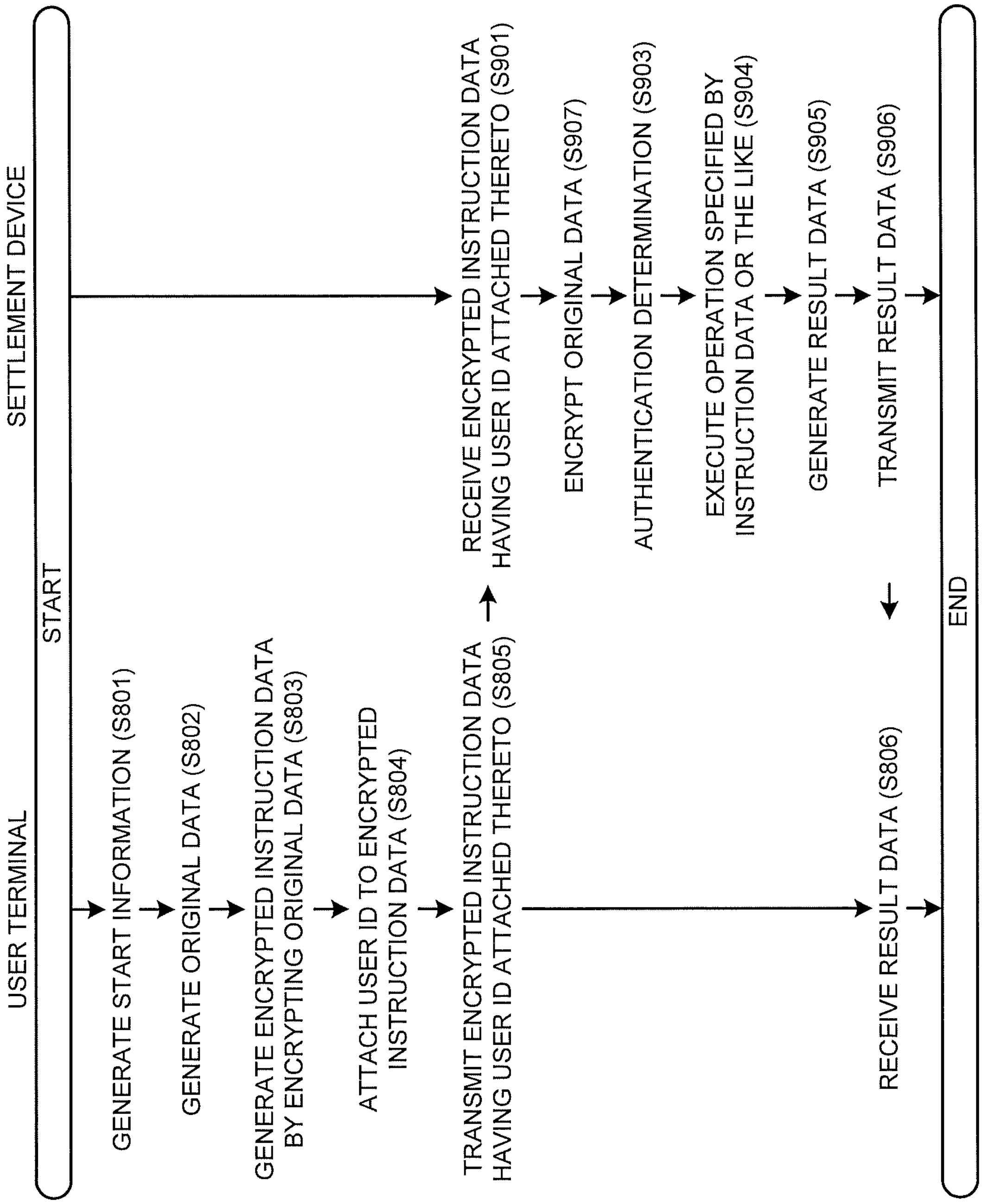
USER TERMINAL
SETTLEMENT DEVICE
START
GENERATE START INFORMATION (S801)
GENERATE ORIGINAL DATA (S802)
GENERATE ENCRYPTED INSTRUCTION DATA BY ENCRYPTING ORIGINAL DATA (S803)
ATTACH USER ID TO ENCRYPTED INSTRUCTION DATA (S804)
TRANSMIT ENCRYPTED INSTRUCTION DATA HAVING USER ID ATTACHED THERETO (S805)
RECEIVE ENCRYPTED INSTRUCTION DATA HAVING USER ID ATTACHED THERETO (S901)
ENCRYPT ORIGINAL DATA (S907)
AUTHENTICATION DETERMINATION (S903)
EXECUTE OPERATION SPECIFIED BY INSTRUCTION DATA OR THE LIKE (S904)
GENERATE RESULT DATA (S905)
TRANSMIT RESULT DATA (S906)
RECEIVE RESULT DATA (S806)
END

FIG. 14

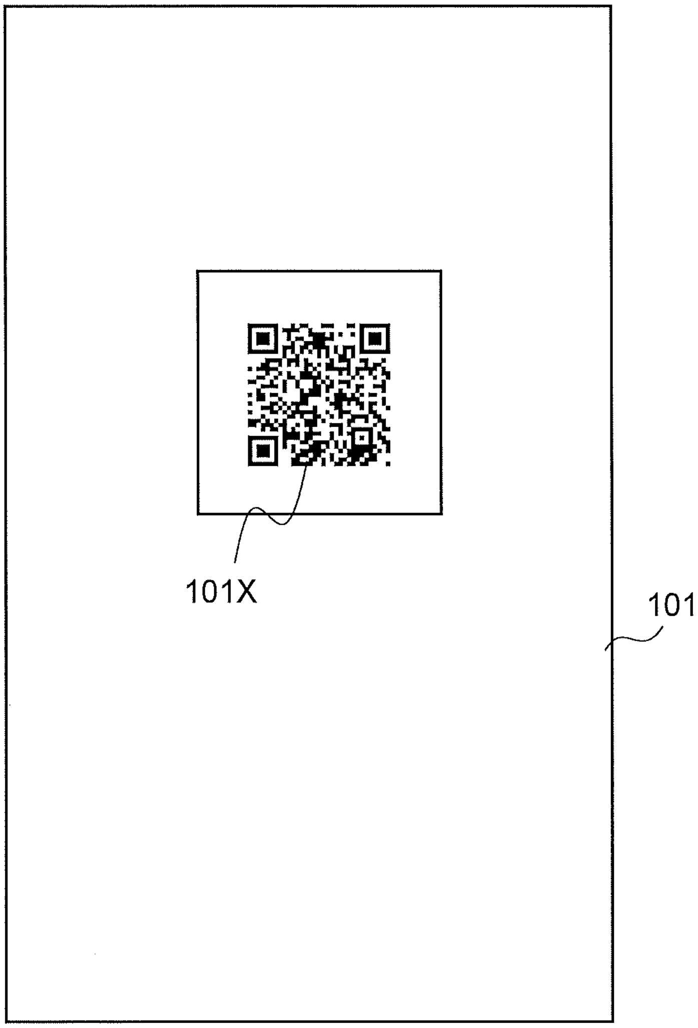


FIG. 15